# EUROPEAN PATENT APPLICATION

(11) **EP 4 806 386 A1**
(43) Date of publication of application: **16.09.2026**
(21) Application number: 24888060.1
(22) Date of filing: 07.11.2024
(51) Int. Cl.: A61C 7/00

(54) **DENTAL INSTRUMENT, DENTAL ASSEMBLY, AND METHOD FOR FORMING DENTAL INSTRUMENT**

(30) Priority: 07.11.2023 CN 202311479305
(71) Applicant: Wuxi EA Bio-Tech Co., Ltd., Wuxi, Jiangsu 214000 (CN)
(72) Inventor: WANG, Meng, Wuxi, Jiangsu 214000 (CN); LI, Junsheng, Wuxi, Jiangsu 214000 (CN); ZHENG, Yikan, Wuxi, Jiangsu 214000 (CN)
(74) Representative: Winter, Brandl - Partnerschaft mbB
(86) International application number: PCT/CN2024/130569
(87) International publication number: WO 2025/098449

(57) **Abstract**

A dental appliance (100), comprising an appliance body (101) having a cavity (S) and a fixing portion (10) protruding from the appliance body (101) toward a side away from the cavity (S), the fixing portion (10) has a perforated portion (11). The fixing portion (10) having the perforated portion (11) enables effective cooperation between the dental appliance (100) and a functional component (200).

## Description

The present application claims priority to Chinese Patent Application No. 202311479305.0, filed on November 7, 2023, and entitled "Dental Appliance, Dental Assembly, and Method for Forming Dental Appliance", the entire content of which is incorporated herein by reference.

### TECHNICAL FIELD

The present application relates to the field of orthodontic treatment technology, and in particular to a dental appliance, a dental assembly, and a method for forming a dental appliance.

### BACKGROUND ART

In the field of orthodontic treatment, a dental appliance and an external functional component were usually required to be used in combination to achieve a specific function. For example, when the dental appliance was an orthodontic appliance, in order to achieve a better orthodontic effect, the orthodontic appliance usually needed to be used in combination with the external functional component, and at this time, an interface structure for connecting the functional component was required to be formed on the orthodontic appliance.

Therefore, it was necessary to develop a structure for connecting the dental appliance and the external functional component.

### SUMMARY

One of the objectives of the present application is to provide a dental appliance, a dental assembly, and a method for forming a dental appliance, which may achieve effective cooperation between the dental appliance and a functional component through a fixing portion having a perforated portion.

One embodiment of the present invention provides a dental appliance, it comprises an appliance body having a cavity, and a fixing portion protruding from the appliance body toward a side away from the cavity, wherein the fixing portion has a perforated portion.

Optionally, the fixing portion comprises a fixing portion body, the fixing portion body encloses to form a hollow space in communication with the cavity, and the perforated portion comprises a first opening penetrating the fixing portion body.

Optionally, the fixing portion body comprises a connected peripheral portion and a top portion, the peripheral portion is connected to the appliance body, the peripheral portion and the top portion enclose to form the hollow space, and the first opening is located at the peripheral portion or the top portion.

Optionally, the dental appliance is an orthodontic appliance, the appliance body is an orthodontic appliance body having a cavity for accommodating teeth, and the fixing portion is located on a buccal surface or a lingual surface of the appliance body.

Optionally, the fixing portion further comprises an insert portion located in the hollow space, the perforated portion further comprises a passage located in the insert portion and in communication with the first opening, and the insert portion is a pre-formed piece.

Optionally, the perforated portion further comprises a second opening penetrating the appliance body, and the passage communicates the first opening and the second opening.

Optionally, the dental appliance is an anchorage screw guide, the appliance body comprises a guide body having a cavity for accommodating teeth and an extension region, the extension region is a region formed by the guide body extending toward a gingival area, the fixing portion is located on the extension region, and the perforated portion communicates the gingival area.

Optionally, the fixing portion further comprises an insert portion located in the hollow space, the perforated portion further comprises a passage located in the insert portion and in communication with the first opening, the passage communicates the gingival area, and the insert portion is a pre-formed piece, or the insert portion is formed by a material filled in the hollow space.

Optionally, the dental appliance further comprises a sleeve, the sleeve has a hole with at least one end being an open end, the sleeve passes through the first opening and extends to the hollow space, and the fixing portion exposes the open end.

Optionally, the fixing portion further comprises an insert portion located in the hollow space, the perforated portion further comprises a passage located in the insert portion and in communication with the first opening, and the sleeve passes through the first opening and extends to the passage.

Optionally, one end of the sleeve has a step portion protruding in a direction away from the hole, the fixing portion body comprises a resisting portion arranged around the first opening, and a surface of the resisting portion on a side away from the hollow space cooperates with the step portion to restrict a movement of the sleeve toward the hollow space.

Optionally, the sleeve and the fixing portion are detachably connected.

Optionally, the dental appliance is an attachment placement template, the appliance body is a template body having a cavity for accommodating teeth, the fixing portion is located on a buccal surface or a lingual surface of the template body, the fixing portion further comprises an insert portion located in the hollow space, the perforated portion further comprises a passage located in the insert portion and in communication with the first opening, the insert portion is an attachment installed to a tooth surface, and the insert portion is a pre-formed piece, or the insert portion is formed by a material filled in the hollow space.

Optionally, the fixing portion body and the appliance body are integrally formed.

Optionally, the dental appliance further comprises a reinforcement portion arranged adjacent to the fixing portion, the reinforcement portion protrudes from the appliance body toward a side away from the cavity, and the reinforcement portion forms a receiving cavity for accommodating an attachment on a tooth surface, and a height of the reinforcement portion is less than a height of the fixing portion.

Optionally, the dental appliance is an anchorage screw guide, the appliance body comprises a guide body having a cavity for accommodating teeth and an extension region, the extension region is a region formed by the guide body extending toward a gingival area, the fixing portion is a pre-formed piece fixed to the extension region, and the perforated portion comprises a passage penetrating the pre-formed piece.

One embodiment of the present invention provides a dental assembly, it comprises a functional component and the dental appliance according to any one of claims 1 to 16, the functional component comprises an insertion end, and the insertion end is limited in the perforated portion.

Optionally, the dental appliance is an orthodontic appliance, the appliance body is an orthodontic appliance body having a cavity for accommodating teeth, the fixing portion is located on a buccal surface or a lingual surface of the appliance body, the functional component comprises an archwire connected to the orthodontic appliance, and the insertion end is a free end of the archwire.

Optionally, the fixing portion comprises a fixing portion body, the fixing portion body encloses to form a hollow space in communication with the cavity, the perforated portion comprises a first opening and a second opening penetrating the fixing portion body, and two insertion ends of the functional component respectively pass through the first opening and the second opening and extend to the hollow space, the first opening and the second opening are located at a same fixing portion, or the first opening and the second opening are respectively located at two fixing portions arranged at an interval.

Optionally, the fixing portion comprises a fixing portion body and an insert portion, the fixing portion body encloses to form a hollow space in communication with the cavity, the insert portion is located in the hollow space, the perforated portion comprises a first opening penetrating the fixing portion body and a passage located in the insert portion and in communication with the first opening, the functional component comprises an insertion end, the insertion end comprises an insertion end body and a retention structure protruding from the insertion end body, the insertion end passes through the first opening and extends to the passage, the retention structure and the insert portion are mutually limited, and the insert portion is formed by a material filled in the hollow space.

Optionally, the functional component is a facebow, a lip bumper, an intrusion auxiliary archwire or an expansion auxiliary archwire.

Optionally, the dental appliance is an anchorage screw guide, the appliance body comprises a guide body having a cavity for accommodating teeth and an extension region, the extension region is a region formed by the guide body extending toward a gingival area, the fixing portion is located on the extension region, the functional component is an anchorage screw, the insertion end is an implantation portion of the anchorage screw, and the implantation portion passes through the perforated portion to be implanted into the gingival area.

Optionally, the dental appliance is an attachment placement template, the appliance body is a template body having a cavity for accommodating teeth, the fixing portion is located on a buccal surface or a lingual surface of the template body, the functional component comprises an archwire connected to the attachment placement template, and the insertion end is a free end of the archwire.

One embodiment of the present invention provides a method for forming a dental appliance, it comprises steps:
providing a dental model, an insert portion is provided at a target position of the dental model, the insert portion is a pre-formed piece, and the insert portion has a passage;
performing film lamination to form a semi-finished product, the semi-finished product having a hollow space corresponding to the insert portion;
making an opening at the hollow space, and cutting and demolding the semi-finished product to obtain a dental appliance, the opening is mutually conducted with the passage, and the dental appliance comprises the insert portion accommodated in the hollow space.

Optionally, providing a dental model, an insert portion is provided at a target position of the dental model specifically comprises:
providing a dental model;
adding an insert portion at a target position of the dental model.

Optionally, adding an insert portion at a target position of the dental model specifically comprises:
adding a suspension portion at a target position of the dental model;
installing an insert portion at the suspension portion, the insert portion comprising a groove body cooperating with the suspension portion.

Optionally, adding an insert portion at a target position of the dental model specifically comprises:
adding an insert portion at a target position of the dental model, and adding a support portion in an area of the dental model adjacent to the target position, the support portion being located on a side of the insert portion close to gingiva.

Compared with the prior art, the beneficial effect of the present application is that: the embodiments of the present application may achieve effective cooperation between the dental appliance and the functional component through the fixing portion having the perforated portion.

### BRIEF DESCRIPTION OF THE DRAWINGS

FIG. 1 to FIG. 7 are various schematic views of a dental assembly (the dental appliance is an orthodontic appliance) according to an embodiment of the present application;
FIG. 8 and FIG. 9 are various schematic views of a dental assembly (the dental appliance is an anchorage screw guide) according to an embodiment of the present application;
FIG. 10 to FIG. 16 are cross-sectional views of a fixing portion (cooperating with an insertion end) of various specific examples in a first implementation form of the present application;
FIG. 17 is a step diagram of a method for forming an orthodontic appliance in the first implementation form of the present application;
FIG. 18 and FIG. 19 are schematic views of a dental assembly in a second implementation form of the present application;
FIG. 20 to FIG. 28 are cross-sectional views of a fixing portion (cooperating with an insertion end) of various specific examples in the second implementation form of the present application;
FIG. 29 is a step diagram of a method for forming an orthodontic appliance in the second implementation form of the present application;
FIG. 30 and FIG. 31 are schematic views of a dental assembly in a third implementation form of the present application;
FIG. 32 to FIG. 39 are cross-sectional views of a fixing portion (cooperating with an insertion end) of various specific examples in the third implementation form of the present application;
FIG. 40 to FIG. 43 are step diagrams and schematic views of a method for forming an orthodontic appliance in the third implementation form of the present application;
FIG. 44 is a schematic view of a dental assembly in a fourth implementation form of the present application;
FIG. 45 and FIG. 46 are schematic views of an insert portion located on a tooth surface in the fourth implementation form of the present application;
FIG. 47 is a cross-sectional view of a fixing portion (cooperating with an insertion end) in the fourth implementation form of the present application;
FIG. 48 and FIG. 49 are schematic views of a dental assembly in a fifth implementation form of the present application;
FIG. 50 and FIG. 51 are schematic views of a dental assembly in a sixth implementation form of the present application;
FIG. 52 and FIG. 53 are schematic views of a dental assembly in a seventh implementation form of the present application;
FIG. 54 to FIG. 57 are cross-sectional views of a fixing portion (cooperating with an insertion end) in the seventh implementation form of the present application;
FIG. 58 and FIG. 59 are schematic views of a dental assembly in an eighth implementation form of the present application;
FIG. 60 to FIG. 62 are cross-sectional views of a fixing portion (cooperating with an insertion end) in the eighth implementation form of the present application;
FIG. 63 and FIG. 64 are schematic views of a dental assembly in a ninth implementation form of the present application;
FIG. 65 and FIG. 66 are schematic views of a dental assembly in a tenth implementation form of the present application;
FIG. 67 is a schematic view of a dental assembly in an eleventh implementation form of the present application;
FIG. 68 is a cross-sectional view of a fixing portion (cooperating with an insertion end) in the eleventh implementation form of the present application;
FIG. 69 is a schematic view of a dental assembly in a twelfth implementation form of the present application;
FIG. 70 is a cross-sectional view of a fixing portion (cooperating with an insertion end) in the twelfth implementation form of the present application;
FIG. 71 is a schematic view of a dental assembly in a thirteenth implementation form of the present application;
FIG. 72 is a cross-sectional view of a fixing portion (cooperating with an insertion end) in the thirteenth implementation form of the present application;
FIG. 73 is a schematic view of a dental assembly in a fourteenth implementation form of the present application;
FIG. 74 is a cross-sectional view of a fixing portion (cooperating with an insertion end) in the fourteenth implementation form of the present application;
FIG. 75 and FIG. 76 are different schematic views of a dental assembly in a fifteenth implementation form of the present application;
FIG. 77 is a cross-sectional view of a fixing portion (cooperating with an insertion end) in the fifteenth implementation form of the present application;
FIG. 78 is a schematic view of a dental assembly in a sixteenth implementation form of the present application;
FIG. 79 is a cross-sectional view of a fixing portion (cooperating with an insertion end) in the sixteenth implementation form of the present application;
FIG. 80 and FIG. 81 are schematic views of the dental assembly in the fifteenth implementation form of the present application;
FIG. 82 to FIG. 86 are cross-sectional views of the fixing portion in the fifteenth implementation form of the present application;
FIG. 87 and FIG. 88 are cross-sectional views of the fixing portion (cooperating with the insertion end) in the fifteenth implementation form of the present application.

### DETAILED DESCRIPTION OF EMBODIMENTS

The present application will be described in detail below with reference to the specific embodiments shown in the drawings. However, these embodiments do not limit the present application, and the structural, method, or functional changes made by a person of ordinary skill in the art based on these embodiments are all included within the protection scope of the present application.

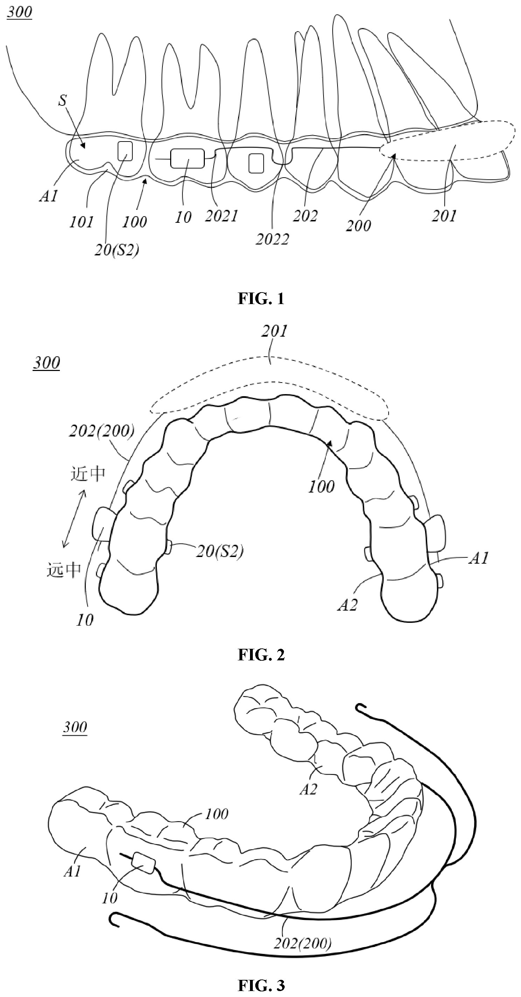

With reference to FIG. 1 to FIG. 7, shown are schematic views of a dental assembly 300 according to an embodiment of the present application.

The dental assembly 300 comprises a functional component 200 and a dental appliance 100.

The dental appliance 100 comprises an appliance body 101 having a cavity S and a fixing portion 10 protruding from the appliance body 101 toward a side away from the cavity S.

The fixing portion 10 has a perforated portion 11, and an insertion end 203 of the functional component 200 is limited in the perforated portion 11, in this way, the interconnection between the dental appliance 100 and the functional component 200 may be achieved, and the position limitation of the functional component 200 may be achieved by limiting the insertion end 203 in the perforated portion 11.

The dental appliance 100 may be an orthodontic appliance, an anchorage screw guide, an attachment placement template, etc.

In an application scenario of the present application, with reference to FIG. 1 to FIG. 7, description is made by taking the dental appliance 100 being an orthodontic appliance 100 as an example.

The orthodontic appliance 100 may be, for example, a clear aligner, and the functional component 200 may be, for example, an archwire type structure, but is not limited thereto.

The clear aligner may be a shell-shaped structure made of a polymer material.

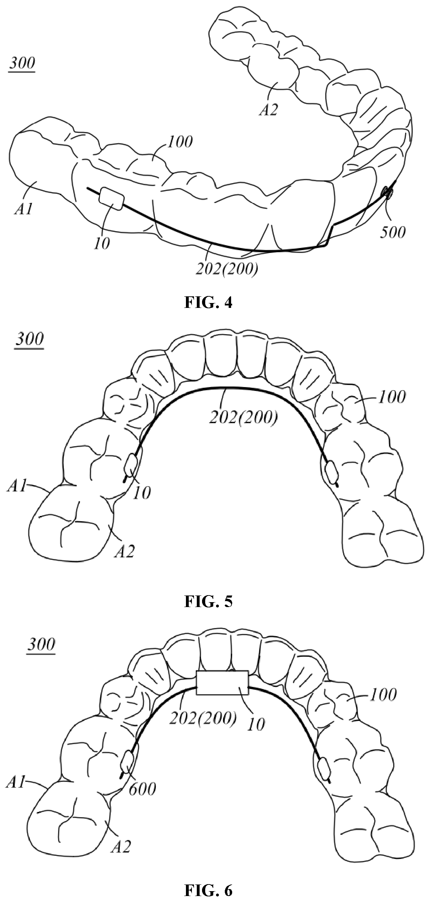

The archwire type structure is, for example, a facebow, a lip bumper, an intrusion auxiliary archwire or an expansion auxiliary archwire, etc, as shown in FIG. 1 and FIG. 2, the functional component 200 is illustrated as a lip bumper, as shown in FIG. 3, the functional component 200 is illustrated as a facebow, as shown in FIG. 4, the functional component 200 is illustrated as an intrusion auxiliary archwire, and as shown in FIG. 5 and FIG. 6, the functional component 200 is illustrated as an expansion auxiliary archwire.

The lip bumper shown in FIG. 1 and FIG. 2 comprises an action portion 201 arranged corresponding to an anterior tooth area and archwires 202 connected to both sides of the action portion 201 and extending toward a distal direction, the action portion 201 contacts an upper lip to interact therewith, and the archwires 202 are connected to two fixing portions 10 on a buccal surface A1 of the orthodontic appliance 100.

The facebow shown in FIG. 3 comprises archwires 202, and the archwires 202 are connected to two fixing portions 10 on a buccal surface A1 of the orthodontic appliance 100.

The intrusion auxiliary archwire shown in FIG. 4 comprises an archwire 202, the archwire 202 is connected to two fixing portions 10 on a buccal surface A1 of the orthodontic appliance 100, and a middle portion of the archwire 202 abuts against a traction buckle 500.

The expansion auxiliary archwire shown in FIG. 5 comprises an archwire 202, and the archwire 202 is connected to two fixing portions 10 on a lingual surface A2 of the orthodontic appliance 100.

The expansion auxiliary archwire shown in FIG. 6 comprises an archwire 202, a middle portion of the archwire 202 passes through a fixing portion 10 on a lingual surface A2 of the orthodontic appliance 100, and two ends of the archwire 202 pass through two groove-shaped structures 600 on the lingual surface A2 of the orthodontic appliance 100.

The orthodontic appliance 100 comprises an appliance body 101 having a cavity S for accommodating teeth, and a fixing portion 10 protruding from the appliance body 101 toward a side away from the cavity S, that is, at this time, the appliance body 101 is an orthodontic appliance body 101, and the fixing portion 10 is located on a buccal surface A1 or a lingual surface A2 of the appliance body 101.

Taking the functional component 200 being a lip bumper as an example, the fixing portion 10 is arranged corresponding to the buccal surface A1 of a posterior tooth area, the dental assembly 300 comprises two fixing portions 10 located in two posterior tooth areas of a same dental arch, the functional component 200 comprises two insertion ends 203, and the two insertion ends 203 are matched with the two fixing portions 10 in a one-to-one manner.

The two archwires 202 connecting the action portion 201 of the lip bumper respectively extend toward two distal directions on left and right sides, two free ends of the two archwires 202 away from the lip bumper are defined as two insertion ends 203, an entrance of the perforated portion 11 of the fixing portion 10 is located on a mesial side of the fixing portion 10, and the insertion end 203 enters the perforated portion 11 through the entrance of the perforated portion 11 to achieve the connection between the functional component 200 and the orthodontic appliance 100.

In practical application, when the upper lip interacts with the action portion 201 of the lip bumper, an acting force may be transmitted to the fixing portion 10 through the archwire 202, and then the fixing portion 10 transmits the acting force to the orthodontic appliance 100 to achieve molar distalization in the posterior tooth area.

Of course, in other application scenarios, when the functional component 200 is a non-archwire type structure, the insertion end 203 may also not be a free end of an archwire, the insertion end 203 may be another structure, in addition, the fixing portion 10 may also be arranged corresponding to other areas of teeth (for example, the fixing portion 10 shown in FIG. 5 and FIG. 6 is arranged corresponding to the lingual surface A2), and the entrance of the perforated portion 11 may also be located at other positions.

The insertion end 203 enters the fixing portion 10 through the perforated portion 11 to achieve mutual limitation between the insertion end 203 and the fixing portion 10, thereby achieving effective cooperation between the functional component 200 and the orthodontic appliance 100.

Optionally, in each orthodontic step, a spatial relative position between the fixing portion 10 and a target point remains unchanged.

The target point refers to a point that does not move during an orthodontic process, for example, the target point is a point on a palatal tissue or a point in the anterior tooth area, or the target point is a virtual point in a software design process, such as a point on a CBCT corresponding to a nose, etc.

In each orthodontic step, the spatial relative position between the fixing portion 10 and the target point remains unchanged, which may ensure that a relative distance between a force application point (corresponding to the target point) and an action point (corresponding to the fixing portion 10) remains unchanged, thereby achieving continuous and stable force application by the functional component 200.

At this time, a joint portion (i.e., the fixing portion 10) of the functional component 200 and the orthodontic appliance 100 is movable relative to teeth to be treated (teeth in the posterior tooth area).

Optionally, a free end of the archwire 202 (i.e., the insertion end 203) enters the perforated portion 11 through the entrance of the perforated portion 11, the dental assembly 300 further comprises a stopper portion 2021 connected to the insertion end 203, and a peripheral area of the entrance cooperates with the stopper portion 2021 to restrict the archwire 202 from moving into the perforated portion 11, i.e., to prevent the archwire 202 from continuously moving in the distal direction and excessively entering the interior of the perforated portion 11. In this way, the acting force of the archwire 202 may be more effectively transmitted to the fixing portion 10.

In addition, at least one U-shaped bent portion 2022 is further formed at the archwire 202, the U-shaped bent portion 2022 is located between the stopper portion 2021 and the action portion 201, and the U-shaped bent portion 2022 may be used to adjust a length of the archwire 202 in a mesial-distal direction.

Optionally, the orthodontic appliance 100 further comprises a reinforcement portion 20 arranged adjacent to the fixing portion 10, the reinforcement portion 20 protrudes from the appliance body 101 toward a side away from the cavity S, and the reinforcement portion 20 forms a receiving cavity S2 for accommodating an attachment on a tooth surface, and a height of the reinforcement portion 20 is less than a height of the fixing portion 10.

Optionally, an attachment may be pre-added on the tooth surface, when the orthodontic appliance 100 is worn, the receiving cavity S2 of the reinforcement portion 20 cooperates with the attachment, in this way, a retention ability between the orthodontic appliance 100 and teeth under a force may be enhanced to prevent a debonding phenomenon of the orthodontic appliance 100, and making the height of the reinforcement portion 20 small may avoid excessive interference of the reinforcement portion 20 with an oral cavity interior or the functional component 200.

Since the functional component 200 applies a force to the fixing portion 10, an area of the appliance body 101 connected to the fixing portion 10 is prone to detach from the tooth surface, and in severe cases, a debonding phenomenon of the entire orthodontic appliance 100 may occur, therefore, in this embodiment, the reinforcement portion 20 may be arranged adjacent to the fixing portion 10. As shown in FIG. 1 and FIG. 2, the reinforcement portion 20 is arranged on left and right sides and an opposite side of the fixing portion 10.

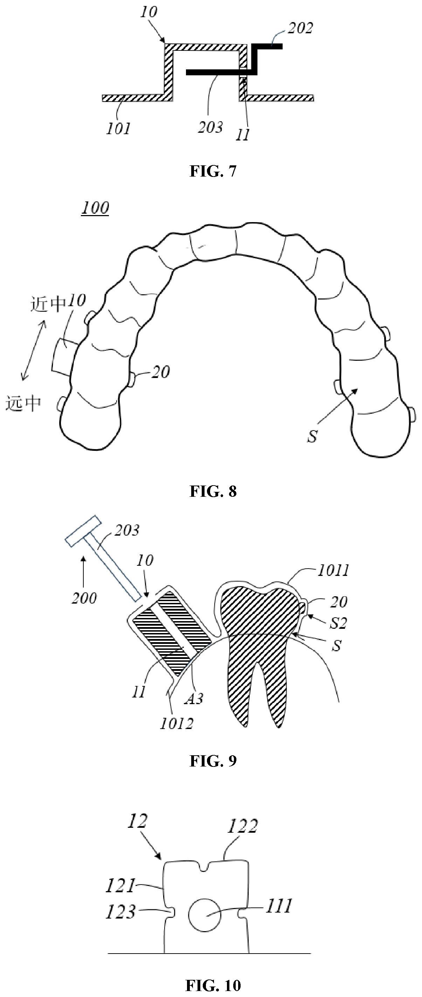

In another application scenario of the present application, with reference to FIG. 8 and FIG. 9, description is made by taking the dental appliance 100 being an anchorage screw guide 100 as an example.

The functional component 200 may be, for example, an anchorage screw 200, but is not limited thereto.

The anchorage screw guide 100 comprises a guide body 1011 having a cavity S for accommodating teeth and an extension region 1012, the extension region 1012 is a region formed by the guide body 1011 extending toward a gingival area A3, that is, at this time, the appliance body 101 comprises the connected guide body 1011 and the extension region 1012, and the fixing portion 10 is located on the extension region 1012, specifically, the fixing portion 10 is located on a side of the extension region 1012 away from the gingival area A3.

The fixing portion 10 has a perforated portion 11, an insertion end 203 of the anchorage screw 200 is limited in the perforated portion 11, the insertion end 203 is an implantation portion at a lower end of the anchorage screw 200, and the insertion end 203 passes through the perforated portion 11 to be implanted into the gingival area A3.

An extension direction of the perforated portion 11 may be designed according to a required implantation direction of the anchorage screw 200.

When the insertion end 203 of the anchorage screw 200 enters the perforated portion 11, the perforated portion 11 may constrain the implantation direction of the anchorage screw 200 so that the anchorage screw 200 is implanted into the gingival area A3 along the extension direction of the perforated portion 11. In this way, the implantation direction of the anchorage screw 200 may be better controlled.

As shown in FIG. 9, the fixing portion 10 is a partial area of the extension region 1012, that is, the fixing portion 10 is arranged closely against the gingival area A3, the perforated portion 11 is a through hole at the extension region 1012, and the anchorage screw 200 passes through the perforated portion 11 to be implanted into the gingival area A3, the perforated portion 11 provides a guiding effect for the implantation of the anchorage screw 200, but is not limited thereto. In order to provide a better guiding assistance for the anchorage screw 200, the fixing portion 10 may be a structure protruding from the extension region 1012, for details, reference may be made to the specific implementation forms below.

Optionally, the anchorage screw guide 100 further comprises a reinforcement portion 20 arranged adjacent to the fixing portion 10, the reinforcement portion 20 protrudes from the extension region 1012 or the guide body 1011 toward a side away from the cavity S, and the reinforcement portion 20 forms a receiving cavity S2 for accommodating an attachment on the tooth surface, and a height of the reinforcement portion 20 is less than a height of the fixing portion 10.

Optionally, the reinforcement portion 20 is arranged in an area of the guide body 1011, an attachment may be pre-added on the tooth surface, when the anchorage screw guide 100 is worn, the receiving cavity S2 of the reinforcement portion 20 cooperates with the attachment. In this way, a retention ability between the anchorage screw guide 100 and teeth under a force may be enhanced to prevent a debonding phenomenon of the anchorage screw guide 100, and making the height of the reinforcement portion 20 small may avoid excessive interference of the reinforcement portion 20 with an oral cavity interior or the functional component 200.

In the following, various implementation forms of the fixing portion 10 in different application scenarios are introduced.

In a first implementation form, with reference to FIG. 10 to FIG. 16, a dental assembly 300 comprises a dental appliance 100 and a functional component 200, the dental appliance 100 is an orthodontic appliance 100, and the functional component 200 is a lip bumper.

In the first implementation form, the orthodontic appliance 100 comprises an appliance body 101 having a cavity S for accommodating teeth and a fixing portion 10 protruding from the appliance body 101 toward a side away from the cavity S, and the fixing portion 10 comprises a perforated portion 11 for inserting an insertion end 203 of the functional component 200.

The fixing portion 10 comprises a fixing portion body 12, the fixing portion body 12 comprises a connected peripheral portion 121 and a top portion 122, the peripheral portion 121 is connected to the appliance body 101, and the peripheral portion 121 and the top portion 122 enclose to form a hollow space S1 in communication with the cavity S.

The fixing portion body 12 is substantially a cap-shaped structure, a hollow structure in a middle of the fixing portion body 12 forms the hollow space S1, the fixing portion body 12 and the appliance body 101 are integrally formed, a forming process of the fixing portion body 12 is simple, and the fixing portion body 12 and the appliance body 101 are stably cooperated.

Optionally, the perforated portion 11 comprises a first opening 111 penetrating the fixing portion body 12, and the insertion end 203 is inserted into the first opening 111, that is, at this time, the insertion end 203 may be mutually limited with the fixing portion 10 only through the first opening 111.

Optionally, the perforated portion 11 may further comprise a second opening 112 penetrating the fixing portion body 12, and the insertion end 203 sequentially passes through the first opening 111, the hollow space S1 and the second opening 112, which may further improve a limiting effect between the insertion end 203 and the fixing portion 10.

The first opening 111 is located at the peripheral portion 121 or the top portion 122, and the second opening 112 is located at the peripheral portion 121 or the top portion 122, but is not limited thereto, the number of openings and the opening positions of the perforated portion 11 may be determined according to actual conditions.

Optionally, when the first opening 111 and the second opening 112 are both located at the peripheral portion 121 and arranged opposite to each other, the fixing portion 10 may serve as the fixing portion 10 located in a middle of the lingual surface A2 of the orthodontic appliance 100 in the expansion auxiliary archwire shown in FIG. 6.

In this implementation form, with reference to FIG. 10, the fixing portion body 12 has a reinforcing rib 123, and the reinforcing rib 123 may improve an overall strength of the fixing portion body 12. The reinforcing rib 123 may be a concave-convex structure. FIG. 10 takes the reinforcing rib 123 being a notch structure as an example, and the reinforcing rib 123 may be located at the peripheral portion 121 and/or the top portion 122 of the fixing portion body 12.

In this implementation form, the hollow space S1 enclosed and formed by the fixing portion body 12 may be a rectangular hollow space or a rectangular-like hollow space.

Here, the fixing portion body 12 is arranged corresponding to the buccal surface A1 or the lingual surface A2. In a direction parallel to the buccal surface A1, a cross-sectional profile of the fixing portion body 12 is rectangular, and a long side of the rectangle is parallel to the mesial-distal direction. In a direction perpendicular to the mesial-distal direction, a cross-sectional profile of the fixing portion body 12 is trapezoidal, but is not limited thereto.

In the following, several specific examples of the first implementation form are introduced.

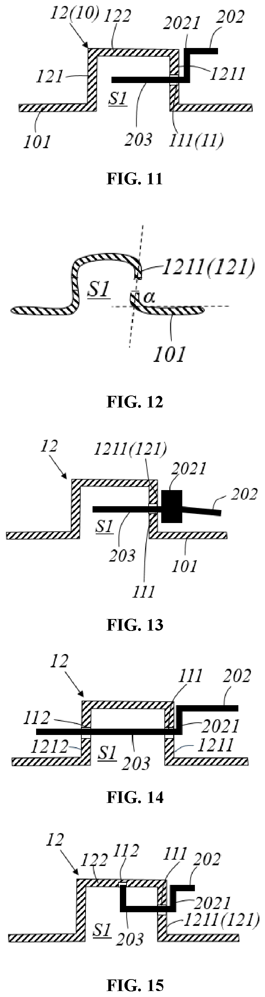

With reference to FIG. 11 and FIG. 12, shown are schematic views of a cross-section of the fixing portion body 12 in a direction perpendicular to a buccal-lingual connection line cooperating with an archwire 202 in a first specific example.

In the first specific example, the perforated portion 11 only comprises a first opening 111 located on a mesial side surface 1211 of the peripheral portion 121, that is, at this time, other areas of the fixing portion body 12 are closed areas, and the insertion end 203 enters the hollow space S1 through the first opening 111.

The dental assembly 300 comprises a stopper portion 2021 connected to the insertion end 203, the stopper portion 2021 is a bent area of the archwire 202. After the insertion end 203 enters the hollow space S1, the stopper portion 2021 and the mesial side of the peripheral portion 121 abut against each other to restrict a length of the archwire 202 entering the hollow space S1, and an acting force received by the archwire 202 may be transmitted to the fixing portion 10 through the cooperation between the stopper portion 2021 and the mesial side surface 1211 of the peripheral portion 121.

In this specific example, a distance between a center of the first opening 111 and the tooth surface is in a range of 0.8 mm to 4 mm, and an opening size of the first opening 111 is less than or equal to half of an area of the mesial side surface 1211 of the peripheral portion 121, so as to avoid loss of support strength for the stopper portion 2021 due to an excessively large opening size of the first opening 111.

In addition, the first opening 111 is a circular hole, an elliptical hole, or a polygon with a chamfer, when the first opening 111 is a circular hole, a diameter of the first opening 111 is in a range of 0.6 mm to 1.5 mm.

In this specific example, with reference to FIG. 12, an included angle α is formed between the peripheral portion 121 and the appliance body 101, and the included angle α may be in a range of 80° to 100°, preferably, the included angle α between at least a partial area of the peripheral portion 121 and the appliance body 101 is an acute angle.

Here, taking the included angle α between the mesial side surface 1211 of the peripheral portion 121 and the appliance body 101 being an acute angle as an example, the included angle α is in a range of 85° to 90°, at this time, when the hollow space S1 is deformed due to failure under an abnormal acting force, further tearing of the first opening 111 may be effectively avoided.

With reference to FIG. 13, shown is a schematic view of a cross-section of the fixing portion body 12 in a direction perpendicular to the buccal-lingual connection line cooperating with the archwire 202 in a second specific example, for ease of description, structures that are the same as or similar to those in the first specific example in the second specific example are denoted by the same or similar reference numbers, and the same applies below.

The main difference between the second specific example and the first specific example lies in that: the stopper portion 2021 in the second specific example is a block-shaped structure sleeved on the archwire 202, and the stopper portion 2021 may be integrally formed with the archwire 202, or the stopper portion 2021 is fixed to the archwire 202 by means of welding, adhesion, clamping, etc.

Here, when the hollow space S1 is deformed due to failure under an abnormal acting force, the stopper portion 2021 may fully act on a boundary area between the mesial side surface 1211 and the appliance body 101 so that the hollow space S1 is as close to the tooth surface as possible, which may offset the acting force on the hollow space S1 as much as possible, thereby effectively avoiding further tearing of the first opening 111.

For other descriptions of the second specific example, reference may be made to other specific examples, which will not be repeated here.

With reference to FIG. 14, shown is a schematic view of a cross-section of the fixing portion body 12 in a direction perpendicular to the buccal-lingual connection line cooperating with the archwire 202 in a third specific example.

The main difference between the third specific example and the first specific example lies in that: the perforated portion 11 in the third specific example comprises a first opening 111 located on the mesial side surface 1211 of the peripheral portion 121 and a second opening 112 located on a distal side surface 1212, that is, at this time, the first opening 111 and the second opening 112 are arranged face to face, and the insertion end 203 extends along the mesial-distal direction and sequentially passes through the first opening 111, the hollow space S1 and the second opening 112, in this way, a traveling path of the insertion end 203 may be lengthened, thereby improving a cooperation strength between the insertion end 203 and the fixing portion body 12, and also improving a deformation resistance ability of the hollow space S1.

Here, a connection line between the first opening 111 and the second opening 112 is parallel to the mesial-distal direction, and a spacing distance between the first opening 111 and the second opening 112 is in a range of 1 mm to 8 mm.

For other descriptions of the third specific example, reference may be made to other specific examples, which will not be repeated here.

With reference to FIG. 15, shown is a schematic view of a cross-section of the fixing portion body 12 in a direction perpendicular to the buccal-lingual connection line cooperating with the archwire 202 in a fourth specific example.

The main difference between the fourth specific example and the first specific example lies in that: the perforated portion 11 in the fourth specific example comprises a first opening 111 located on the mesial side surface 1211 of the peripheral portion 121 and a second opening 112 located on the top portion 122, that is, at this time, the first opening 111 and the second opening 112 are arranged on adjacent surfaces, and after passing through the first opening 111, the insertion end 203 is bent and passes through the second opening 112.

Here, the second opening 112 is a blind hole, which may avoid that the insertion end 203 passes out of the top portion 122 and irritates oral mucosal tissue, of course, the second opening 112 may also be a through hole, and the insertion end 203 passing out of the top portion 122 may be bent and closely attached to the top portion 122.

Of course, in other specific examples, the second opening 112 may also be located on another surface connected to the mesial side surface 1211 and located on the peripheral portion 121, for example, the second opening 112 is located on a surface of the peripheral portion 121 close to the gingiva.

Here, by bending the insertion end 203, the cooperation strength between the insertion end 203 and the fixing portion body 12 may be improved, and the deformation resistance ability of the hollow space S1 may also be improved.

For other descriptions of the fourth specific example, reference may be made to other specific examples, which will not be repeated here.

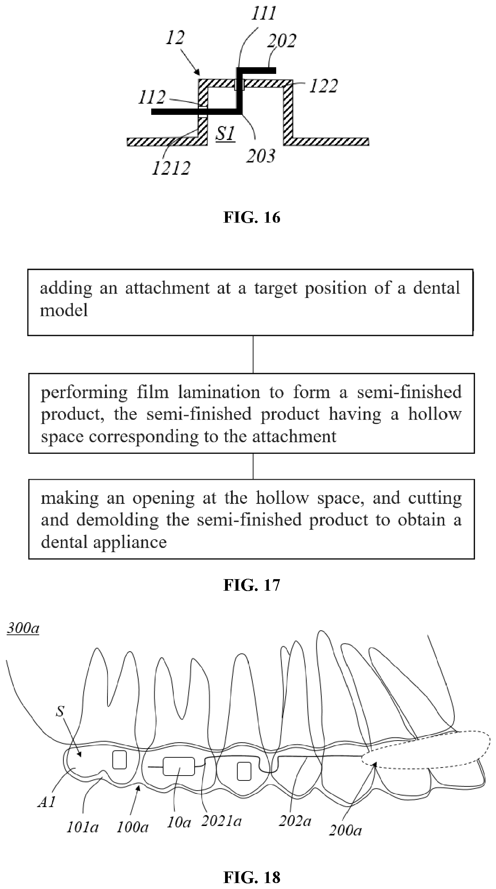

With reference to FIG. 16, shown is a schematic view of a cross-section of the fixing portion body 12 in a direction perpendicular to the buccal-lingual connection line cooperating with the archwire 202 in a fifth specific example.

The main difference between the fifth specific example and the first specific example lies in that: the perforated portion 11 in the fifth specific example comprises a first opening 111 located on the top portion 122 and a second opening 112 located on a distal side surface 1212 of the peripheral portion 121, that is, at this time, the first opening 111 and the second opening 112 are arranged on adjacent surfaces, and after passing through the first opening 111, the insertion end 203 is bent and passes through the second opening 112.

The first implementation form further provides a method for forming a dental appliance 100. Here, taking the dental appliance 100 being an orthodontic appliance 100 as an example, the forming method may also be applied to scenarios such as an anchorage screw guide, an attachment placement template, etc., and the same applies below.

With reference to FIG. 17, the method for forming a dental appliance 100 comprises steps:
adding an attachment at a target position of a dental model;
performing film lamination to form a semi-finished product, the semi-finished product having a hollow space S1 corresponding to the attachment;
making an opening at the hollow space S1, and cutting and demolding the semi-finished product to obtain a dental appliance 100.

Here, the "target position" refers to a position where the hollow space S1 (i.e., the fixing portion body 12) is required to be formed, for the three steps of making an opening, cutting, and demolding, an appropriate order may be selected according to actual conditions, the step of making an opening may form a first opening 111 on the hollow space S1, or form the first opening 111 and a second opening 112 simultaneously.

With reference to FIG. 18 to FIG. 28, in a second implementation form, a dental assembly 300a comprises a dental appliance 100a and a functional component 200a, the dental appliance 100a is an orthodontic appliance 100a, and the functional component 200a is a lip bumper.

In the second implementation form, the orthodontic appliance 100a comprises an appliance body 101a having a cavity S for accommodating teeth and a fixing portion 10a protruding from the appliance body 101a toward a side away from the cavity S, and the fixing portion 10a comprises a perforated portion 11a for inserting an insertion end 203a of the functional component 200a.

The fixing portion 10a comprises a fixing portion body 12a and an insert portion 13a.

The fixing portion body 12a encloses to form a hollow space S1 in communication with the cavity S, and the insert portion 13a is located in the hollow space S1.

Optionally, the fixing portion body 12a comprises a connected peripheral portion 121a and a top portion 122a, the peripheral portion 121a is connected to the appliance body 101a, and the peripheral portion 121a and the top portion 122a enclose to form the hollow space S1.

The fixing portion body 12a is substantially a cap-shaped structure, a hollow structure in a middle of the fixing portion body 12a forms the hollow space S1, the fixing portion body 12a and the appliance body 101a are integrally formed, a forming process of the fixing portion body 12a is simple, and the fixing portion body 12a and the appliance body 101a are stably cooperated.

The perforated portion 11a comprises a first opening 111a penetrating the fixing portion body 12a and a passage 131a located in the insert portion 13a and in communication with the first opening 111a, the insertion end 203a passes through the first opening 111a and extends to the passage 131a, and the first opening 111a is located at the peripheral portion 121a or the top portion 122a.

Optionally, the insert portion 13a is formed by a material filled in the hollow space S1.

For example, the insert portion 13a may be made of a resin material, the insertion end 203a may be inserted into the hollow space S1 first, and then the insert portion 13a is formed by filling resin, in this way, various forms of the insertion end 203a may be adapted, and the insert portion 13a and the insertion end 203a may be closely fitted.

The insert portion 13a is a block-shaped structure, and an outer surface of the insert portion 13a contacts an inner surface of the fixing portion body 12a, that is, the insert portion 13a may be filled in the hollow space S1 as a filler.
the insert portion 13a contacts an inner surface of the fixing portion body 12a, that is, the insert portion 13a may be filled in the hollow space S1 as a filler.

Optionally, by adding the insert portion 13a, an overall strength of the entire fixing portion 10a may be improved, thereby improving a deformation resistance ability of the entire fixing portion 10a under an acting force, moreover, the insertion end 203a passes through both the first opening 111a and the passage 131a, that is, the insertion end 203a is connected to both the fixing portion body 12a and the insert portion 13a, which may greatly improve a stability of the cooperation between the insertion end 203a and the fixing portion 10a, thereby achieving effective transmission of an acting force of an archwire 202a.

Optionally, the perforated portion 11a may further comprise a second opening 112a penetrating the fixing portion body 12a, the passage 131a penetrates the insert portion 13a, and the insertion end 203a sequentially passes through the first opening 111a, the passage 131a and the second opening 112a, which may further improve a limiting effect between the insertion end 203a and the fixing portion 10a.

The first opening 111a is located at the peripheral portion 121a or the top portion 122a, and the second opening 112a is located at the peripheral portion 121a or the top portion 122a, but is not limited thereto, the number of openings and the opening positions of the perforated portion 11a may be determined according to actual conditions.

Optionally, the passage 131a is in a linear shape or an L-shape, but is not limited thereto.

Optionally, the insertion end 203a comprises an insertion end body 2032a and a retention structure 2031a protruding from the insertion end body 2032a, and the retention structure 2031a and the insert portion 13a are mutually limited, thereby improving a limiting effect between the insertion end 203a and the fixing portion 10a.

Optionally, an inner contour of the passage 131a and an outer contour of the insertion end 203a are mutually matched.

The passage 131a comprises a portion for accommodating the insertion end body 2032a and a portion for accommodating the retention structure 2031a, when the insert portion 13a is formed by a material filled in the hollow space S1, the insert portion 13a directly contacts the insertion end 203a during a filling process, the inner contour of the passage 131a formed by the insert portion 13a is completely matched with the outer contour of the insertion end 203a, and the insert portion 13a is in complete contact with the insertion end 203a.

Optionally, the insertion end body 2032a extends along a first direction, the retention structure 2031a extends along a second direction, an included angle between the first direction and the second direction is an acute angle, a right angle, or an obtuse angle, and the insertion end body 2032a and the retention structure 2031a are arranged at an angle, which may prevent the insertion end 203a from detaching from the passage 131a along a direction opposite to an insertion direction.

Optionally, a friction structure or at least one engagement structure is formed between the insert portion 13a and the fixing portion body 12a, which may improve a cooperation strength between the insert portion 13a and the fixing portion body 12a.

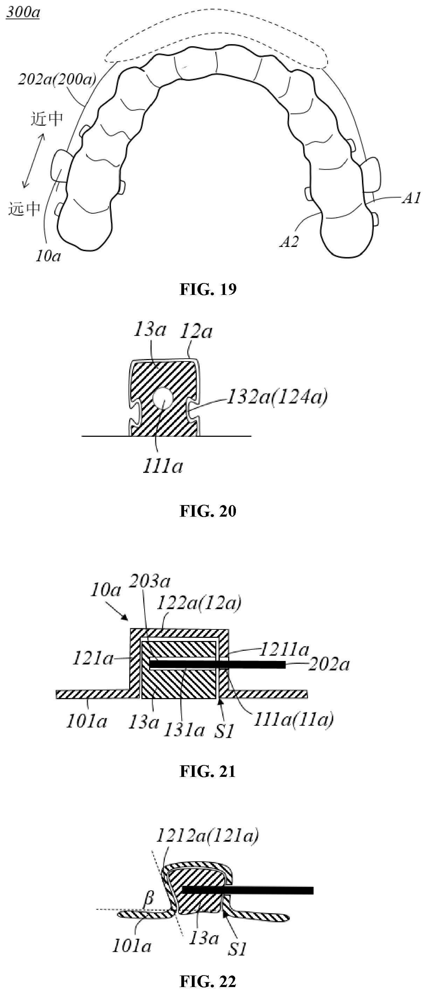

With reference to FIG. 20, when an engagement structure is formed between the insert portion 13a and the fixing portion body 12a, the engagement structure comprises a groove 132a and a protrusion 124a that are mutually cooperated, one of the groove 132a and the protrusion 124a is located on the insert portion 13a, and the other is located on the fixing portion body 12a.

Here, taking the groove 132a being located on the insert portion 13a and the protrusion 124a being located on the fixing portion body 12a as an example, the engagement structure may be arranged close to a tooth surface.

Optionally, a surface of the insert portion 13a away from the top portion 122a contacts the tooth surface, and the insert portion 13a comprises a first material layer contacting the tooth surface and a second material layer away from the tooth surface, and a hardness of the first material layer is less than a hardness of the second material layer.

The insert portion 13a may comprise at least two materials, using a softer material to contact the tooth surface may improve a wearing experience, and filling a harder material in an area of the hollow space S1 away from the tooth surface may further improve a strength of that part of the hollow space S1.

In other examples, the surface of the insert portion 13a away from the top portion 122a may not contact the tooth surface, that is, at this time, a gap may exist between the insert portion 13a and the tooth surface.

Optionally, the hollow space S1 enclosed and formed by the fixing portion body 12a may be a rectangular hollow space or a rectangular-like hollow space.

The fixing portion body 12a is arranged corresponding to the buccal surface A1 or the lingual surface A2, in a direction parallel to the buccal surface A1, a cross-sectional profile of the fixing portion body 12a is rectangular, and a long side of the rectangle is parallel to the mesial-distal direction, in a direction perpendicular to the mesial-distal direction, a cross-sectional profile of the fixing portion body 12a is trapezoidal, but is not limited thereto.

Optionally, an outer contour of the fixing portion body 12a is in a gradually converging form in a direction gradually approaching the tooth surface, that is, an outer contour dimension of the top portion 122a is larger than an outer contour dimension at a position where the peripheral portion 121a is connected to the appliance body 101a, which may prevent the insert portion 13a from accidentally detaching from the hollow space S1.

In the following, several specific examples of the second implementation form are introduced.

With reference to FIG. 21 and FIG. 22, shown are schematic views of a cross-section of the fixing portion 10a in a direction perpendicular to the buccal-lingual connection line cooperating with an archwire 202a in a first specific example.

In the first specific example, the perforated portion 11a only comprises a first opening 111a located on a mesial side surface 1211a of the peripheral portion 121a and a passage 131a located in the insert portion 13a, that is, at this time, other areas of the fixing portion body 12a are closed areas, the passage 131a is a linear semi-penetrating passage (i.e., the passage 131a does not completely penetrate the insert portion 13a), and the insertion end 203a enters the passage 131a through the first opening 111a along the mesial-distal direction, at this time, the insertion end 203a may be prevented from slipping off distally.

Here, when the insertion end 203a extends to an end of the passage 131a, a relative stillness is achieved between the insertion end 203a and the insert portion 13a, and the insertion end 203a cannot continue to move in the distal direction, at this time, a stopper portion 2021 located at the archwire 202 similar to that in the first implementation form may be omitted, of course, the stopper portion 2021 may not be omitted when needed.

In this specific example, a distance between a center of the first opening 111a and the tooth surface is in a range of 0.8 mm to 4 mm, and the first opening 111a is a circular hole, an elliptical hole, or a polygon with a chamfer.

In this specific example, with reference to FIG. 22, an included angle β is formed between the peripheral portion 121a and the appliance body 101a, and the included angle β may be in a range of 80° to 120°, preferably, the included angle β between at least a partial area of the peripheral portion 121a and the appliance body 101a is an acute angle.

Here, taking the included angle β between a distal side surface 1212a of the peripheral portion 121a and the appliance body 101a being an acute angle as an example, the included angle β is in a range of 70° to 90°, at this time, when the insert portion 13a is deformed due to failure under an abnormal acting force, the insert portion 13a will not slip off toward the tooth surface in the hollow space S1.

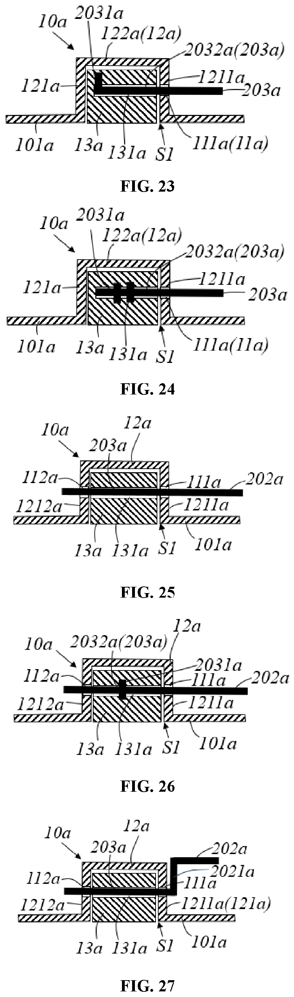

With reference to FIG. 23, shown is a schematic view of a cross-section of the fixing portion 10a in a direction perpendicular to the buccal-lingual connection line cooperating with an archwire 202a in a second specific example, for ease of description, structures that are the same as or similar to those in the first specific example in the second specific example are denoted by the same or similar reference numbers, and the same applies below.

The main difference between the second specific example and the first specific example lies in that: the insertion end 203a in the second specific example comprises an insertion end body 2032a and a retention structure 2031a protruding from the insertion end body 2032a, the retention structure 203 1a is a bent structure connected to an end of the insertion end body 2032a, at this time, the passage 131a is an L-shaped passage, and the provision of the retention structure 2031a may further prevent the insertion end 203a from continuing to move in the distal direction, thereby improving a limiting effect between the insertion end 203a and the fixing portion 10a.

The retention structure 2031a and the insertion end body 2032a are integrally formed, for example, the retention structure 2031a and the insertion end body 2032a may be simultaneously formed by bending an end area of the insertion end 203a.

For other descriptions of the second specific example, reference may be made to other specific examples, which will not be repeated here.

With reference to FIG. 24, shown is a schematic view of a cross-section of the fixing portion 10a in a direction perpendicular to the buccal-lingual connection line cooperating with an archwire 202a in a third specific example.

The main difference between the third specific example and the first specific example lies in that: the insertion end 203a in the third specific example comprises an insertion end body 2032a and a retention structure 2031a protruding from the insertion end body 2032a, the retention structure 2031a is a fence-like structure protruding from the insertion end body 2032a, at this time, the passage 131a is in a special-shaped structure having a plurality of branch passages, and the provision of the retention structure 2031a may further prevent the insertion end 203a from continuing to move in the distal direction, thereby improving a limiting effect between the insertion end 203a and the fixing portion 10a.

For other descriptions of the third specific example, reference may be made to other specific examples, which will not be repeated here.

With reference to FIG. 25, shown is a schematic view of a cross-section of the fixing portion 10a in a direction perpendicular to the buccal-lingual connection line cooperating with an archwire 202a in a fourth specific example.

The main difference between the fourth specific example and the first specific example lies in that: the perforated portion 11a in the fourth specific example comprises a first opening 111a located on a mesial side surface 1211a of the peripheral portion 121a and a second opening 112a located on a distal side surface 1212a, that is, at this time, the first opening 111a and the second opening 112a are arranged face to face, and the insertion end 203a extends along the mesial-distal direction and sequentially passes through the first opening 111a, the passage 131a and the second opening 112a.

For other descriptions of the fourth specific example, reference may be made to other specific examples, which will not be repeated here.

With reference to FIG. 26, shown is a schematic view of a cross-section of the fixing portion 10a in a direction perpendicular to the buccal-lingual connection line cooperating with an archwire 202a in a fifth specific example.

The main difference between the fifth specific example and the first specific example lies in that: the perforated portion 11a in the fifth specific example comprises a first opening 111a located on a mesial side surface 1211a of the peripheral portion 121a and a second opening 112a located on a distal side surface 1212a, that is, at this time, the first opening 111a and the second opening 112a are arranged face to face, and the insertion end 203a extends along the mesial-distal direction and sequentially passes through the first opening 111a, the passage 131a and the second opening 112a.

The insertion end 203a in the fifth specific example comprises an insertion end body 2032a and a retention structure 2031a protruding from the insertion end body 2032a, the retention structure 2031a is a columnar structure protruding from the insertion end body 2032a, and the provision of the retention structure 2031a may further prevent the insertion end 203a from continuing to move in the distal direction, thereby improving a limiting effect between the insertion end 203a and the fixing portion 10a.

For other descriptions of the fifth specific example, reference may be made to other specific examples, which will not be repeated here.

With reference to FIG. 27, shown is a schematic view of a cross-section of the fixing portion 10a in a direction perpendicular to the buccal-lingual connection line cooperating with an archwire 202a in a sixth specific example.

The main difference between the sixth specific example and the first specific example lies in that: the perforated portion 11a in the sixth specific example comprises a first opening 111a located on a mesial side surface 1211a of the peripheral portion 121a and a second opening 112a located on a distal side surface 1212a, that is, at this time, the first opening 111a and the second opening 112a are arranged face to face, and the insertion end 203a extends along the mesial-distal direction and sequentially passes through the first opening 111a, the passage 131a and the second opening 112a.

The sixth specific example further comprises a stopper portion 2021a located at the archwire 202a, the stopper portion 2021a is a bent area of the archwire 202a, after the insertion end 203a enters the hollow space S1, the stopper portion 2021a and the mesial side of the peripheral portion 121a abut against each other to restrict a length of the archwire 202a entering the hollow space S1, and an acting force received by the archwire 202a may be transmitted to the fixing portion 10a through the cooperation between the stopper portion 2021a and the mesial side surface 1211a of the peripheral portion 121a.

For other descriptions of the sixth specific example, reference may be made to other specific examples, which will not be repeated here.

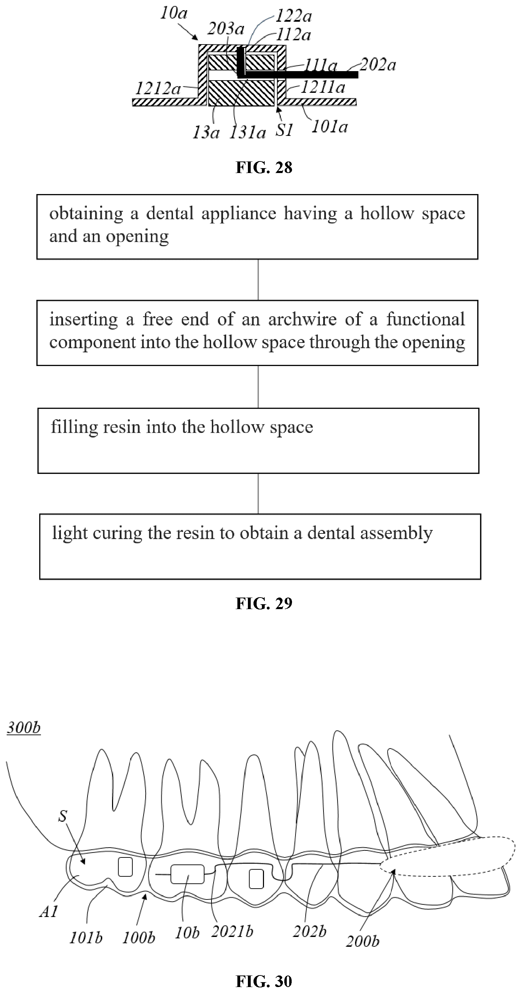

With reference to FIG. 28, shown is a schematic view of a cross-section of the fixing portion 10a in a direction perpendicular to the buccal-lingual connection line cooperating with an archwire 202a in a seventh specific example.

The main difference between the seventh specific example and the first specific example lies in that: the perforated portion 11a in the seventh specific example comprises a first opening 111a located on a mesial side surface 1211a of the peripheral portion 121a and a second opening 112a located on the top portion 122a, that is, at this time, the first opening 111a and the second opening 112a are arranged on adjacent surfaces, the passage 131a is in an L-shape, after passing through the first opening 111a, the insertion end 203a is bent and passes through the second opening 112a, and the second opening 112a may further limit the insertion end 203a.

The end of the insertion end 203a is bent, and a portion of the insertion end 203a extending to the second opening 112a may also be regarded as the retention structure as described above.

Optionally, the second opening 112a is a blind hole, which may avoid that the insertion end 203a passes out of the top portion 122a and irritates oral mucosal tissue, of course, the second opening 112a may also be a through hole, and the insertion end 203a passing out of the top portion 122a may be bent and closely attached to the top portion 122a.

Of course, in other specific examples, the second opening 112a may also be located on another surface connected to the mesial side surface 1211a and located on the peripheral portion 121a, for example, the second opening 112a is located on a surface of the peripheral portion 121a close to the gingiva.

For other descriptions of the seventh specific example, reference may be made to other specific examples, which will not be repeated here.

The second implementation form further provides a method for forming a dental assembly 300a, with reference to FIG. 29, the forming method comprises steps:
obtaining a dental appliance 100a having a hollow space S1 and a first opening 111a (or a first opening 111a and a second opening 112a) according to the method for forming a dental appliance 100 of the first implementation form;
inserting a free end of an archwire 202a of a functional component 200a into the hollow space S1 through the first opening 111a;
filling resin into the hollow space S1;
light curing the resin to obtain a dental assembly 300a.

Here, the resin after light curing forms the insert portion 13a as described above, and a portion inside the insert portion 13a corresponding to the insertion end 203a is the passage 131a.

It can be understood that, since the insert portion 13a is post-formed, a form of the insertion end 203a at this time is not constrained by the insert portion 13a, the insertion end 203a may form the retention structure 2031a as described above, or in other words, the insertion end 203a at this time may be bent according to actual requirements, in this way, a cooperation strength between the insertion end 203a and the insert portion 13a may be improved, and a movement of the insertion end 203a in the distal direction may be constrained (i.e., the stopper portion 2021 similar to that in the first implementation form may be omitted).

With reference to FIG. 30 to FIG. 39, in a third implementation form, a dental assembly 300b comprises a dental appliance 100b and a functional component 200b, the dental appliance 100b is an orthodontic appliance 100b, and the functional component 200b is a lip bumper.

In the third implementation form, the orthodontic appliance 100b comprises an appliance body 101b having a cavity S for accommodating teeth and a fixing portion 10b protruding from the appliance body 101b toward a side away from the cavity S, and the fixing portion 10b comprises a perforated portion 11b for inserting an insertion end 203b of the functional component 200b.

The fixing portion 10b comprises a fixing portion body 12b and an insert portion 13b.

The fixing portion body 12b encloses to form a hollow space S1 in communication with the cavity S, and the insert portion 13b is a pre-formed piece installed in the hollow space S1.

Optionally, the fixing portion body 12b comprises a connected peripheral portion 121b and a top portion 122b, the peripheral portion 121b is connected to the appliance body 101b, and the peripheral portion 121b and the top portion 122b enclose to form the hollow space S1.

The fixing portion body 12b is substantially a cap-shaped structure, a hollow structure in a middle of the fixing portion body 12b forms the hollow space S1, the fixing portion body 12b and the appliance body 101b are integrally formed, a forming process of the fixing portion body 12b is simple, and the fixing portion body 12b and the appliance body 101b are stably cooperated.

Optionally, the perforated portion 11b comprises a first opening 111b penetrating the fixing portion body 12b and a passage 131b located in the insert portion 13b and in communication with the first opening 111b, the insertion end 203b passes through the first opening 111b and extends to the passage 131b, and the first opening 111b is located at the peripheral portion 121b or the top portion 122b.

The main difference between the third implementation form and the second implementation form lies in that: the insert portion 13b in the third implementation form is a pre-formed piece, and a passage 131b is pre-formed in the insert portion 13b, that is, the passage 131b is a structure pre-formed in the insert portion 13b, the pre-formed piece may improve a strength of the insert portion 13b and is convenient for installation and use.

Considering a difficulty of inserting the insertion end 203b into the passage 131b, here, the passage 131b is set as a linear passage, and the insertion end 203a is also substantially a linear structure extending along the distal direction.

Optionally, by adding the insert portion 13b, an overall strength of the entire fixing portion 10b may be improved, thereby improving a deformation resistance ability of the entire fixing portion 10b under an acting force, moreover, the insertion end 203b passes through both the first opening 111b and the passage 131b, that is, the insertion end 203b is connected to both the fixing portion body 12b and the insert portion 13b, which may greatly improve a stability of the cooperation between the insertion end 203b and the fixing portion 10b, thereby achieving effective transmission of an acting force of an archwire 202b.

The perforated portion 11b may further comprise a second opening 112b penetrating the fixing portion body 12b, the passage 131b penetrates the insert portion 13b, the passage 131b communicates the first opening 111b and the second opening 112b, and the insertion end 203b sequentially passes through the first opening 111b, the passage 131b and the second opening 112b, which may further improve a limiting effect between the insertion end 203b and the fixing portion 10b.

A connection line direction of the first opening 111b, the passage 131b and the second opening 112b is parallel to the mesial-distal direction, and a spacing distance between the first opening 111b and the second opening 112b is in a range of 1 mm to 8 mm.

Optionally, a friction structure or at least one engagement structure is formed between the insert portion 13b and the fixing portion body 12b, which may improve a cooperation strength between the insert portion 13b and the fixing portion body 12b.

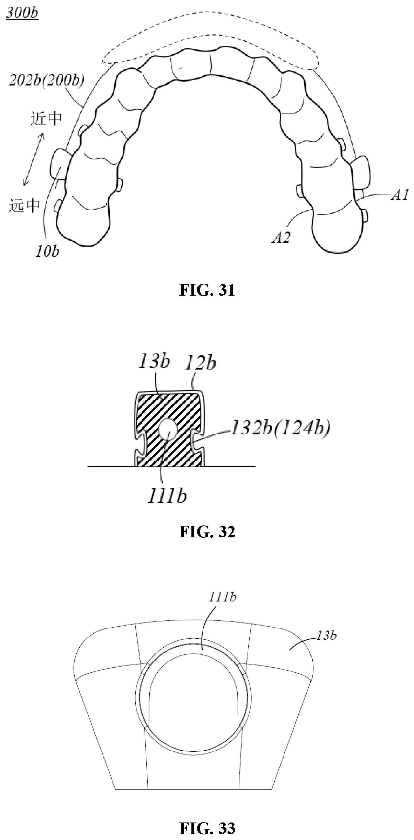

With reference to FIG. 32, when an engagement structure is formed between the insert portion 13b and the fixing portion body 12b, the engagement structure comprises a groove 132b and a protrusion 124b that are mutually cooperated, one of the groove 132b and the protrusion 124b is located on the insert portion 13b, and the other is located on the fixing portion body 12b.

Here, taking the groove 132b being located on the insert portion 13b and the protrusion 124b being located on the fixing portion body 12b as an example, the engagement structure may be arranged close to a tooth surface.

Optionally, the hollow space S1 enclosed and formed by the fixing portion body 12b may be a rectangular hollow space or a rectangular-like hollow space.

The fixing portion body 12b is arranged corresponding to the buccal surface A1 or the lingual surface A2, in a direction parallel to the buccal surface A1, a cross-sectional profile of the fixing portion body 12b is rectangular, and a long side of the rectangle is parallel to the mesial-distal direction, in a direction perpendicular to the mesial-distal direction, a cross-sectional profile of the fixing portion body 12b is trapezoidal, but is not limited thereto.

Optionally, an outer contour of the fixing portion body 12b is in a gradually converging form in a direction gradually approaching the tooth surface, that is, an outer contour dimension of the top portion 122b is larger than an outer contour dimension at a position where the peripheral portion 121b is connected to the appliance body 101b, which may prevent the insert portion 13b from accidentally detaching from the hollow space S1.

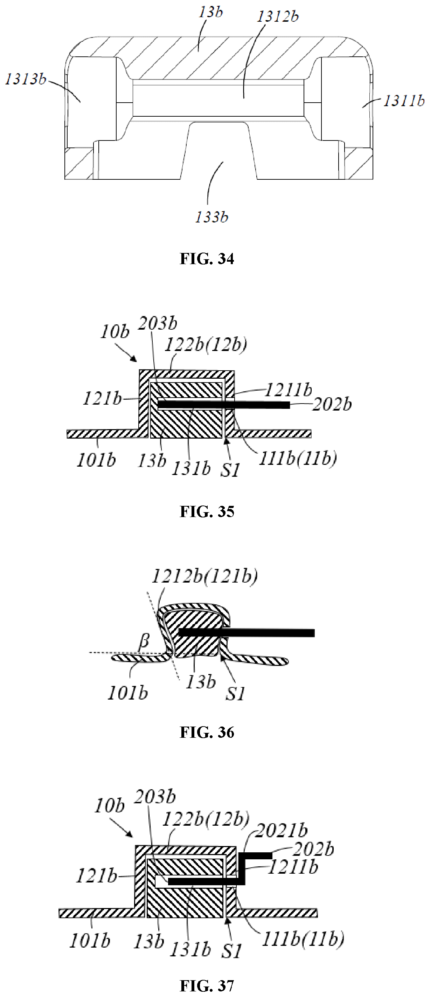

Optionally, with reference to FIG. 33 and FIG. 34, shown are schematic views of the pre-formed insert portion 13b.

The passage 131b in the insert portion 13b comprises a first passage 1311b close to the first opening 111b and a second passage 1312b connected to the first passage 1311b, and an opening caliber of the first passage 1311b is greater than or equal to an opening caliber of the second passage 1312b.

That is, generally, a portion of the passage 131b close to the first opening 111b has a relatively large opening caliber, in this way, it may be avoided that the insert portion 13b is damaged when the first opening 111b is formed at the hollow space S1 where the insert portion 13b is installed, of course, the opening caliber of the first passage 1311b may be equal to the opening caliber of the second passage 1312b.

Similarly, when the fixing portion body 12b simultaneously comprises a first opening 111b and a second opening 112b, a side of the second passage 1312b away from the first passage 1311b further comprises a third passage 1313b, and an opening caliber of the third passage 1313b is larger than the opening caliber of the second passage 1312b.

That is, at this time, the entire passage 131b is in a form with a small middle and two large ends, which may avoid damaging the insert portion 13b during a subsequent opening process.

In addition, an inner contour of the second passage 1312b may cooperate with an outer contour of the insertion end 203b to achieve mutual limitation between the second passage 1312b and the insertion end 203b, for example, an inner contour cross-section of the second passage 1312b and an outer contour cross-section of the insertion end 203b are both rectangular or circular, etc. The first passage 1311b and the third passage 1313b mainly play a role of avoidance during an opening process, and a form of the inner contour cross-sections of the first passage 1311b and the third passage 1313b is not required.

In the following, several specific examples of the third implementation form are introduced.

With reference to FIG. 35 and FIG. 36, shown are schematic views of a cross-section of the fixing portion 10b in a direction perpendicular to the buccal-lingual connection line cooperating with an archwire 202b in a first specific example.

In the first specific example, the perforated portion 11b only comprises a first opening 111b located on a mesial side surface 1211b of the peripheral portion 121b and a passage 131b located in the insert portion 13b, that is, at this time, other areas of the fixing portion body 12b are closed areas.

An end of the passage 131b away from the first opening 111b is a closed end, the passage 131b is a linear semi-penetrating passage (i.e., the passage 131b does not completely penetrate the insert portion 13b), and the insertion end 203b enters the passage 131b through the first opening 111b along the mesial-distal direction, at this time, the insertion end 203b may be prevented from slipping off distally.

Here, when the insertion end 203b extends to an end of the passage 131b, a relative stillness is achieved between the insertion end 203b and the insert portion 13b, and the insertion end 203b cannot continue to move in the distal direction.

In this specific example, a distance between a center of the first opening 111b and the tooth surface is in a range of 0.8 mm to 4 mm, and the first opening 111b is a circular hole, an elliptical hole, or a polygon with a chamfer.

In this specific example, an included angle β is formed between the peripheral portion 121b and the appliance body 101b, and the included angle β may be in a range of 80° to 120°, preferably, the included angle β between at least a partial area of the peripheral portion 121b and the appliance body 101b is an acute angle.

Here, taking the included angle β between a distal side surface 1212b of the peripheral portion 121b and the appliance body 101b being an acute angle as an example, the included angle β is in a range of 70° to 90°, at this time, when the insert portion 13b is deformed due to failure under an abnormal acting force, the insert portion 13b will not slip off toward the tooth surface in the hollow space S1.

With reference to FIG. 37, shown is a schematic view of a cross-section of the fixing portion 10b in a direction perpendicular to the buccal-lingual connection line cooperating with an archwire 202b in a second specific example.

The main difference between the second specific example and the first specific example lies in that: the insertion end 203b in the second specific example does not extend to an end of the passage 131b, but a stopper portion 2021b is formed in an area close to the insertion end 203b to restrict the insertion end 203b from continuing to move in the distal direction.

Specifically, the dental assembly 300b comprises a stopper portion 2021b connected to the insertion end 203b, a peripheral area of the first opening 111b cooperates with the stopper portion 2021b to restrict the archwire 202b from moving into the passage 131b, and the stopper portion 2021b is a bent area of the archwire 202b, in this way, an acting force of the archwire 202b may be more effectively transmitted to the fixing portion 10b.

For other descriptions of the second specific example, reference may be made to other specific examples, which will not be repeated here.

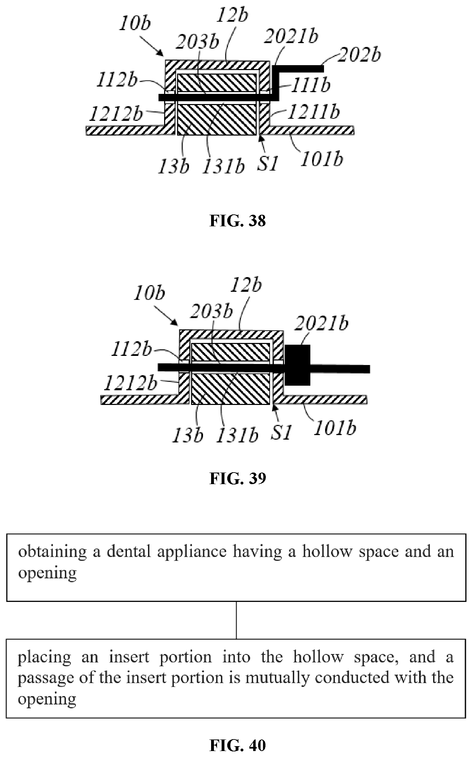

With reference to FIG. 38, shown is a schematic view of a cross-section of the fixing portion 10b in a direction perpendicular to the buccal-lingual connection line cooperating with an archwire 202b in a third specific example.

The main difference between the third specific example and the first specific example lies in that: the perforated portion 11b in the third specific example comprises a first opening 111b located on a mesial side surface 1211b of the peripheral portion 121b and a second opening 112b located on a distal side surface 1212b, the passage 131b is a linear passage, and a connection line of the first opening 111b, the passage 131b and the second opening 112b is parallel to the mesial-distal direction.

The insertion end 203b restricts the insertion end 203b from continuing to move in the distal direction by forming a stopper portion 2021b in an area close to the insertion end 203b, and the stopper portion 2021b is a bent area of the archwire 202b.

Here, the second opening 112b is a through hole. In other specific examples, the second opening 112b may also be a blind hole.

For other descriptions of the third specific example, reference may be made to other specific examples, which will not be repeated here.

With reference to FIG. 39, shown is a schematic view of a cross-section of the fixing portion 10b in a direction perpendicular to the buccal-lingual connection line cooperating with an archwire 202b in a fourth specific example.

The main difference between the fourth specific example and the third specific example lies in that: the stopper portion 2021b in the fourth specific example is a block-shaped structure sleeved on the archwire 202b.

For other descriptions of the fourth specific example, reference may be made to other specific examples, which will not be repeated here.

The third implementation form further provides a method for forming a dental appliance 100b, with reference to FIG. 40, the forming method comprises steps:
obtaining a dental appliance 100b having a hollow space S1 and a first opening 111b (or a first opening 111b and a second opening 112b) according to the method for forming a dental appliance 100 of the first implementation form;
placing an insert portion 13b into the hollow space S1, and a passage 131b of the insert portion 13b is mutually conducted with the first opening 111b.

That is, the hollow space S1 and the first opening 111b are formed first, and then the pre-formed insert portion 13b is installed into the hollow space S1.

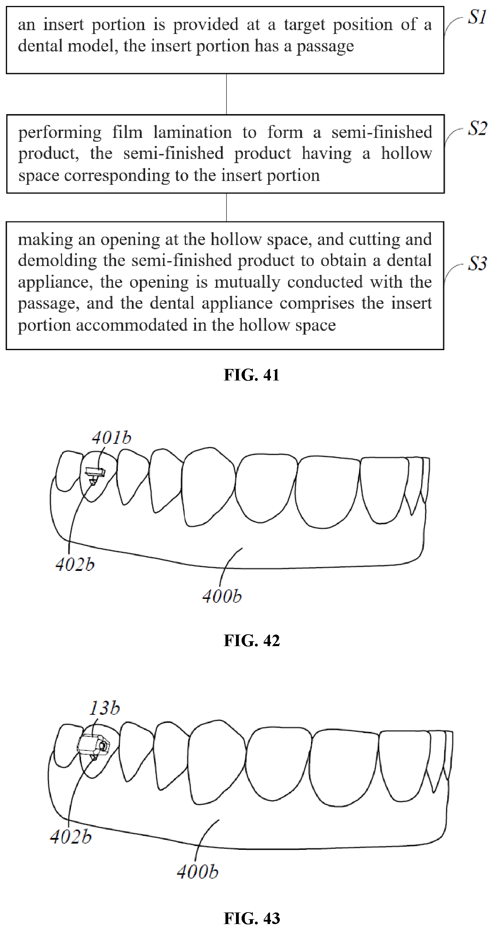

With reference to FIG. 41 to FIG. 43, the third implementation form further provides another method for forming a dental appliance 100b, the forming method comprises steps:
S1: providing a dental model 400b, an insert portion 13b is provided at a target position of the dental model 400b, the insert portion 13b is a pre-formed piece, and the insert portion 13b has a passage 131b.

Optionally, the insert portion 13b may be formed together with the dental model 400b, and a weak connection is provided between the insert portion 13b and the dental model 400b, or the insert portion 13b is a structure subsequently added to the dental model 400b, here, description is made by taking the insert portion 13b being a structure subsequently added to the dental model 400b as an example.

Step S1 specifically comprises:
providing a dental model 400b;
adding an insert portion 13b at a target position of the dental model 400b.

With reference to FIG. 42, step S1 specifically comprises:
adding a suspension portion 401b at a target position of the dental model 400b;
installing an insert portion 13b at the suspension portion 401b, the insert portion 13b comprising a groove body 133b cooperating with the suspension portion 401b.

Here, specifically referring to the schematic view of the insert portion 13b in FIG. 34, the insert portion 13b forms a groove body 133b penetrating a bottom surface of the insert portion 13b below the passage 131b, the groove body 133b may be a fully through groove that is through in the mesial-distal direction, or a semi-through groove that is not through in the mesial-distal direction.

When the groove body 133b is a fully through groove, there is no wall in the mesial-distal direction of the fully through groove, and the fully through groove is inserted from a side of the suspension portion 401b to achieve mutual cooperation between the fully through groove and the suspension portion 401b.

When the groove body 133b is a semi-through groove, the semi-through groove has a wall structure in the mesial-distal direction, and at this time, the insert portion 13b is required to be clamped to the suspension portion 401b in a direction close to the tooth surface for the semi-through groove.

In addition, step S1 may further comprise:
With reference to FIG. 43, adding an insert portion 13b at a target position of the dental model 400b, and adding a support portion 402b in an area of the dental model 400b adjacent to the target position, the support portion 402b being located on a side of the insert portion 13b close to the gingiva.

Here, the insert portion 13b is a block-shaped structure, specifically taking the insert portion 13b being an inverted trapezoidal structure as an example, when a subsequent film lamination operation is performed, a situation where a tight pressing may not be achieved may occur around the insert portion 13b, and at this time, wrinkles may occur, since a film lamination direction is from an occlusal surface toward the gingival direction, the film lamination in an area above the insert portion 13b (i.e., an area close to the occlusal surface) is relatively sufficient, and a probability of wrinkles is not high, while wrinkles are prone to occur in an area close to the gingiva, forming the support portion 402b in this area may provide a transition for a film lamination process, thereby avoiding generation of wrinkles.

Here, an end of the support portion 402b close to the gingiva is preferably an inclined surface structure, which may better achieve a film lamination transition, the support portion 402b may be directly arranged to abut against the insert portion 13b, and a gap may also exist between the support portion 402b and the insert portion 13b.
S2: performing film lamination to form a semi-finished product, the semi-finished product having a hollow space S1 corresponding to the insert portion 13b;
S3: making an opening at the hollow space S1, and cutting and demolding the semi-finished product to obtain a dental appliance 100b, the opening is mutually conducted with the passage 131b, and the dental appliance 100b comprises the insert portion 13b accommodated in the hollow space S1.

Here, a weak cooperation is formed between the insert portion 13b and the suspension portion 401b, when demolding is performed, the insert portion 13b will detach from the suspension portion 401b and leave the dental model 400b together with the hollow space S1, so the dental appliance 100b obtained by demolding comprises the insert portion 13b accommodated in the hollow space S1.

In addition, during the opening process, as described above, since the opening caliber of the passage 131b at a position close to the opening is relatively large, it may be avoided that the insert portion 13b is damaged during the opening process.

The third implementation form further provides a method for forming a dental assembly 300b, comprising steps:
obtaining a dental appliance 100b having an insert portion 13b and a first opening 111b (or a first opening 111b and a second opening 112b);
inserting a free end of an archwire 202b into the passage 131b through the first opening 111b to obtain a dental assembly 300b.

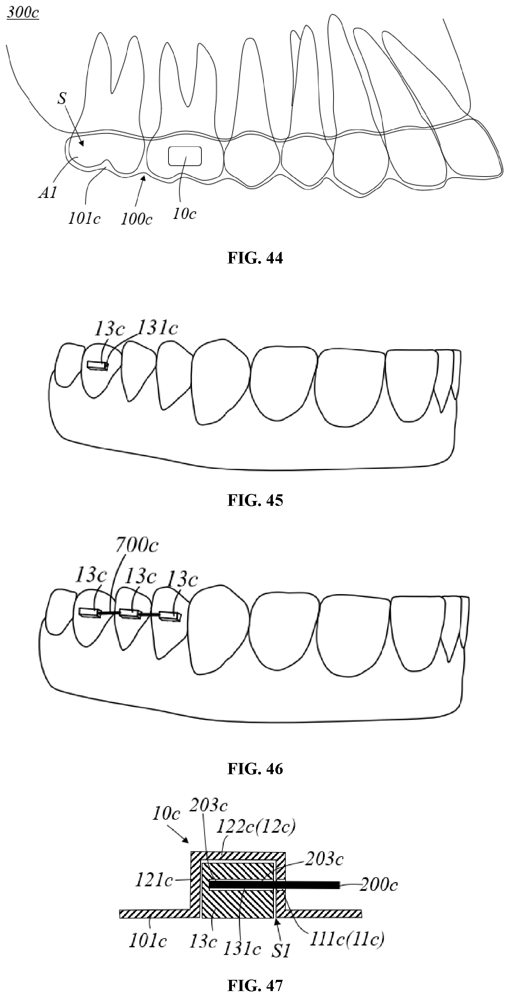

With reference to FIG. 44 to FIG. 47, in a fourth implementation form, a dental appliance 100c is an attachment placement template 100c, an appliance body 101c is a template body 101c having a cavity S for accommodating teeth, and a fixing portion 10c is located on a buccal surface A1 or a lingual surface A2 of the template body 101c.

In the fourth implementation form, the fixing portion 10c comprises a fixing portion body 12c and an insert portion 13c.

The fixing portion body 12c encloses to form a hollow space S1 in communication with the cavity S.

Optionally, the fixing portion body 12c comprises a connected peripheral portion 121c and a top portion 122c, the peripheral portion 121c is connected to the template body 101c, and the peripheral portion 121c and the top portion 122c enclose to form the hollow space S1.

The fixing portion body 12c is substantially a cap-shaped structure, a hollow structure in a middle of the fixing portion body 12c forms the hollow space S1, the fixing portion body 12c and the template body 101c are integrally formed, a forming process of the fixing portion body 12c is simple, and the fixing portion body 12c and the template body 101c are stably cooperated.

Optionally, a perforated portion 11c comprises a first opening 111c penetrating the fixing portion body 12c and a passage 131c located in the insert portion 13c and in communication with the first opening 111c, and the first opening 111c is located at the peripheral portion 121c or the top portion 122c.

In this implementation form, with reference to FIG. 45, the insert portion 13c is an attachment installed to a tooth surface, that is, the insert portion 13c is installed to the tooth surface through the attachment placement template 100c, when the template body 101c is removed, the insert portion 13c detaches from the hollow space S1 and remains on the tooth surface as an attachment.

The insert portion 13c remaining on the tooth surface as an attachment has a passage 131c, and may be subsequently used in cooperation with an archwire or other structures, when the tooth surface has a plurality of insert portions 13c, a plurality of insert portions 13c may be connected by an archwire 700c to form a segmental arch, as shown in FIG. 46.

Optionally, the insert portion 13c remaining on the tooth surface as an attachment may be used as an independent attachment, or cooperate with an orthodontic appliance to achieve combined orthodontic treatment.

Optionally, the insert portion 13c is formed by a material filled in the hollow space S1.

At this time, a dental assembly 300c further comprises a functional component 200c, the functional component 200c is an archwire 200c connected to the attachment placement template 100c, and a free end of the archwire 200c serves as an insertion end 203c and passes through the first opening 111c and extends to the passage 131c.

In practical application, the insertion end 203c of the archwire 200c is first inserted into the hollow space S1 through the first opening 111c, then a resin material is filled into the hollow space S1 and the resin material is made to connect to the tooth surface, after the resin material is cured, the archwire 200c is pulled out and the template body 101c is removed, and the insert portion 13c formed by the resin material and having the passage 131c adheres to the tooth surface, thereby completing an attachment installation.

Optionally, the insert portion 13c may also be a pre-formed piece, and the passage 131c is a structure pre-formed in the insert portion 13c, at this time, the archwire 200c may be omitted, and the insert portion 13c is directly installed to the tooth surface through the attachment placement template 100c.

For other descriptions of the fourth implementation form, reference may be made to other implementation forms, which will not be repeated here.

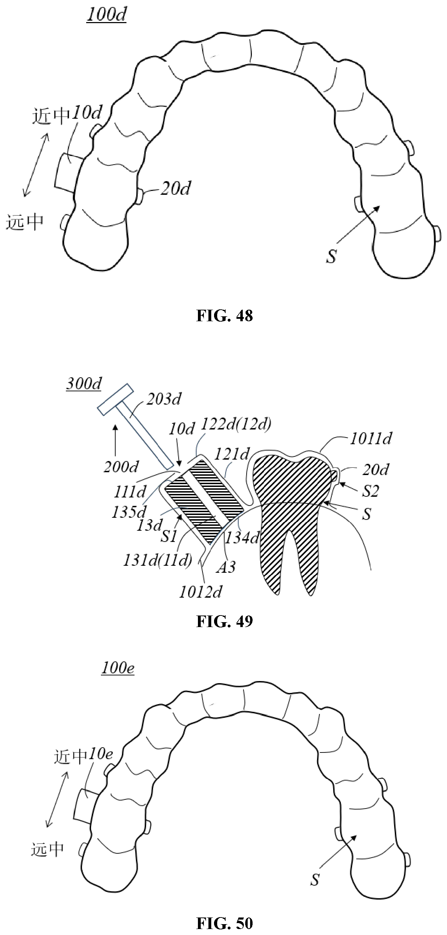

With reference to FIG. 48 and FIG. 49, in a fifth implementation form, a dental assembly 300d is an anchorage screw guide assembly 300d, the anchorage screw assembly 300d comprises an anchorage screw guide 100d and a functional component 200d, and the functional component 200d is an anchorage screw 200d.

In the fifth implementation form, the anchorage screw guide 100d comprises a guide body 1011d having a cavity S for accommodating teeth and an extension region 1012d, the extension region 1012d is a region formed by the guide body 1011d extending toward a gingival area A3, that is, at this time, an appliance body 101d comprises the connected guide body 1011d and the extension region 1012d, a fixing portion 10d is located on the extension region 1012d, specifically, the fixing portion 10d is located on a side of the extension region 1012d away from the gingival area A3, the fixing portion 10d has a perforated portion 11d for implanting an insertion end 203d of the anchorage screw 200d, and the insertion end 203d is an implantation portion at a lower end of the anchorage screw 200d.

The fixing portion 10d comprises a fixing portion body 12d and an insert portion 13d.

The fixing portion body 12d encloses to form a hollow space S1 in communication with the cavity S, and the insert portion 13d is a pre-formed piece installed in the hollow space S1, but is not limited thereto, the insert portion 13d may also be in other forms, for example, the insert portion 13d is formed by a material filled in the hollow space S1, and the material can be pre-filled in the hollow space S1 before implanting the anchorage screw 200d.

Optionally, the fixing portion body 12d comprises a connected peripheral portion 121d and a top portion 122d, the peripheral portion 121d is connected to the extension region 1012d, and the peripheral portion 121d and the top portion 122d enclose to form the hollow space S1.

The fixing portion body 12d is substantially a cap-shaped structure, a hollow structure in a middle of the fixing portion body 12d forms the hollow space S1, the fixing portion body 12d and the extension region 1012d are integrally formed, a forming process of the fixing portion body 12d is simple, and the fixing portion body 12d and the extension region 1012d are stably cooperated.

Optionally, the perforated portion 11d comprises a first opening 111d penetrating the fixing portion body 12d and a passage 131d located in the insert portion 13d and in communication with the first opening 111d, the insertion end 203d passes through the first opening 111d and extends to the passage 131d, the first opening 111d is located at the top portion 122d, the passage 131d communicates the first opening 111d and the gingival area A3, and the anchorage screw 200d sequentially passes through the first opening 111d and the passage 131d to be implanted into the gingival area A3.

An opening caliber of the first opening 111d is not less than an entrance caliber of the passage 131d, the first opening 111d may allow the anchorage screw 200d to smoothly enter the passage 131d, and the passage 131d may constrain an implantation direction of the anchorage screw 200d so that the anchorage screw 200d is implanted into the gingival area A3 along a direction preset by the passage 131d, in this way, the implantation direction of the anchorage screw 200d may be better controlled.

The cooperation between the fixing portion body 12d and the insert portion 13d may improve an overall strength, may prevent the fixing portion 10d from deforming or shifting during an implantation guiding process of the anchorage screw 200d, and moreover, the anchorage screw 200d passes through both the first opening 111d and the passage 131d, which may greatly improve a stability of the cooperation among the anchorage screw 200d, the fixing portion body 12d, and the insert portion 13d, and improve an accuracy of the implantation of the anchorage screw 200d.

When the insert portion 13d is a pre-formed piece, the passage 131d may be a structure pre-formed in the insert portion 13d, and the pre-formed piece may improve a strength of the insert portion 13d and is convenient for installation and use.

Optionally, the insert portion 13d comprises a lower end surface 134d cooperating with the gingival area A3, the lower end surface 134d and the corresponding gingival area A3 cooperate with each other, and the lower end surface 134d may be a customized surface, the customized surface being defined as a surface mutually matched with the contacted gingival area A3, different customized surfaces may be designed corresponding to different gingival areas A3 to improve a stability of the cooperation between the insert portion 13d and the gingival area A3.

The insert portion 13d further comprises an upper end surface 135d cooperating with the top portion 122d, and the upper end surface 135d may be a standard surface cooperating with a standard top portion 122d.

The lower end surface 134d may be made of a relatively soft material to improve a contact experience between the insert portion 13d and the gingival area A3.

Optionally, the insert portion 13d comprises a first material layer contacting the gingival area A3 and a second material layer away from the gingival area A3, and a hardness of the first material layer is less than a hardness of the second material layer.

The insert portion 13d may comprise at least two materials, using a softer material to contact the gingival area A3 may improve a wearing experience, and filling a harder material in a portion of the hollow space S1 away from the gingival area A3 may further improve a strength of that portion of the hollow space S1.

Optionally, the anchorage screw guide 100d further comprises a reinforcement portion 20d arranged adjacent to the fixing portion 10d, the reinforcement portion 20d is arranged in an area of the guide body 1011d, and a receiving cavity S2 formed by the reinforcement portion 20d cooperates with an attachment pre-added on a tooth surface, in this way, a retention ability between the anchorage screw guide 100d and teeth under a force may be enhanced.

Since the anchorage screw 200d applies a force to the fixing portion 10d during implantation, the guide body 1011d connected to the fixing portion body 12d is prone to detach from the tooth surface, especially an area of the guide body 1011d adjacent to the fixing portion 10d, and in severe cases, a debonding phenomenon of the entire anchorage screw guide 100d may occur, arranging the reinforcement portion 20d adjacent to the fixing portion 10d may prevent the guide body 1011d adjacent to the fixing portion 10d from detaching from teeth, i.e., prevent a debonding phenomenon.

Optionally, a side of the guide body 1011d corresponding to the buccal surface A1 extends to form the extension region 1012d corresponding to the gingival area A3, in other specific examples, a side of the guide body 1011d corresponding to the lingual surface A2 may also extend to the gingival area A3 to further improve the retention ability.

For other descriptions of the fifth implementation form, reference may be made to other implementation forms, which will not be repeated here.

It should be noted that, in the fifth implementation form, the insert portion 13d may also be omitted, that is, at this time, the anchorage screw 200d directly passes through the first opening 111d to be implanted into the gingival area A3.

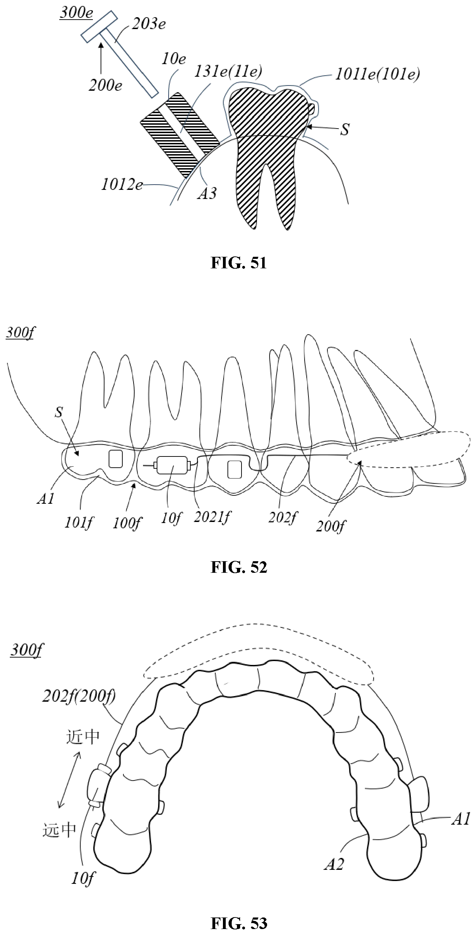

With reference to FIG. 50 and FIG. 51, in a sixth implementation form, a dental assembly 300e is an anchorage screw guide assembly 300e, the anchorage screw assembly 300e comprises an anchorage screw guide 100e and a functional component 200e, and the functional component 200e is an anchorage screw 200e.

In the sixth implementation form, the anchorage screw guide 100e comprises a guide body 1011e having a cavity S for accommodating teeth and an extension region 1012e, the extension region 1012e is a region formed by the guide body 1011e extending toward a gingival area A3, that is, at this time, an appliance body 101e comprises the connected guide body 1011e and the extension region 1012e, a fixing portion 10e is located on the extension region 1012e, specifically, the fixing portion 10e is located on a side of the extension region 1012e away from the gingival area A3, the fixing portion 10e has a perforated portion 11e for implanting an insertion end 203e of the anchorage screw 200e, and the insertion end 203e is an implantation portion at a lower end of the anchorage screw 200e.

The fixing portion 10e is a pre-formed piece fixed to the extension region 1012e, a middle of the pre-formed piece forms a perforated portion 11e, and the perforated portion 11e is a passage 131e corresponding to the gingival area A3.

Optionally, the fixing portion 10e may be a pre-formed piece formed of resin and having a penetrating passage 131e.

The main difference between the sixth implementation form and the fifth implementation form lies in that: the fixing portion 10d in the fifth implementation form comprises a fixing portion body 12d and an insert portion 13d located in a hollow space S1 formed by the fixing portion body 12d, while the sixth implementation form omits the hollow space S1, and directly installs the fixing portion 10e, which is a pre-formed piece, on the extension region 1012e, and the perforated portion 11e only comprises a passage 131e located in the fixing portion 10e.

Optionally, a through hole may be pre-formed in an area of the extension region 1012e corresponding to the passage 131e, when the anchorage screw 200e passes through the passage 131e, it may pass through the through hole to be implanted into the gingival area A3, but is not limited thereto, it is also possible that no through hole is formed in the extension region 1012e, and when the anchorage screw 200e passes through the passage 131e, the anchorage screw 200e directly pierces through the extension region 1012e to be implanted into the gingival area A3.

For other descriptions of the sixth implementation form, reference may be made to other implementation forms, which will not be repeated here.

With reference to FIG. 52 to FIG. 57, in a seventh implementation form, a dental assembly 300f comprises a dental appliance 100f and a functional component 200f, the dental appliance 100f is an orthodontic appliance 100f, and the functional component 200f is a lip bumper.

In the seventh implementation form, the orthodontic appliance 100f comprises an appliance body 101f having a cavity S for accommodating teeth and a fixing portion 10f protruding from the appliance body 101f toward a side away from the cavity S, the fixing portion 10f comprises a fixing portion body 12f and a perforated portion 11f, and the perforated portion 11f is for inserting an insertion end 203f of the functional component 200f.

The fixing portion 10f is located on a buccal surface A1 or a lingual surface A2 of the appliance body 101f.

The fixing portion body 12f encloses to form a hollow space S1 in communication with the cavity S.

Optionally, the fixing portion body 12f comprises a connected peripheral portion 121f and a top portion 122f, the peripheral portion 121f is connected to the appliance body 101f, and the peripheral portion 121f and the top portion 122f enclose to form the hollow space S1.

The fixing portion body 12f is substantially a cap-shaped structure, a hollow structure in a middle of the fixing portion body 12f forms the hollow space S1, the fixing portion body 12f and the appliance body 101f are integrally formed, a forming process of the fixing portion body 12f is simple, and the fixing portion body 12f and the appliance body 101f are stably cooperated.

Optionally, the perforated portion 11f comprises a first opening 111f penetrating the fixing portion body 12f, and the first opening 111f is located at the peripheral portion 121f or the top portion 122f.

The orthodontic appliance 100f further comprises a sleeve 14f, the sleeve 14f has a hole 141f with at least one end being an open end, the sleeve 14f passes through the first opening 111f and extends to the hollow space S1, the fixing portion 10f exposes the open end, and the insertion end 203f is inserted into the hole 141f through the open end.

"The hole 141f with at least one end being an open end" means that the hole 141f penetrates at least one end surface of the sleeve 14f, and an insertion direction of the sleeve 14f is parallel to an extension direction of the hole 141f, after the sleeve 14f passes through the first opening 111f and extends to the hollow space S1, the open end of the hole 141f is located on an outer side for the insertion end 203f to be inserted.

The sleeve 14f is detachably connected to the fixing portion 10f, that is, the sleeve 14f is detachably installed to the fixing portion body 12f, different types of sleeves 14f may be installed to a same fixing portion body 12f, and by replacing the sleeve 14f with a different inner diameter, it is convenient to adapt to archwires 202f of different diameters.

Optionally, the perforated portion 11f further comprises a second opening 112f penetrating the fixing portion body 12f, and the sleeve 14f sequentially passes through the first opening 111f, the hollow space S1 and the second opening 112f, in this way, a stability of the cooperation between the sleeve 14f and the fixing portion body 12f may be improved.

A connection line of the first opening 111f and the second opening 112f is parallel to the mesial-distal direction, and the sleeve 14f also extends along the mesial-distal direction.

Optionally, one end of the sleeve 14f has a step portion 142f protruding in a direction away from the hole 141f, the fixing portion body 12f comprises a resisting portion 125f arranged around the first opening 111f, and a surface of the resisting portion 125f on a side away from the hollow space S1 cooperates with the step portion 142f to restrict a movement of the sleeve 14f toward the hollow space S1.

The surface of the resisting portion 125f on the side away from the hollow space S1 is a mesial side surface 1211f of the fixing portion body 12f, the step portion 142f is located on an outer side of the hollow space S1, the step portion 142f is a flanging structure at an end of the sleeve 14f, the step portion 142f and the mesial side surface 1211f abut against each other to restrict the sleeve 14f from continuing to move in the distal direction, and the step portion 142f is arranged around the open end.

In the following, several specific examples of the seventh implementation form are introduced.

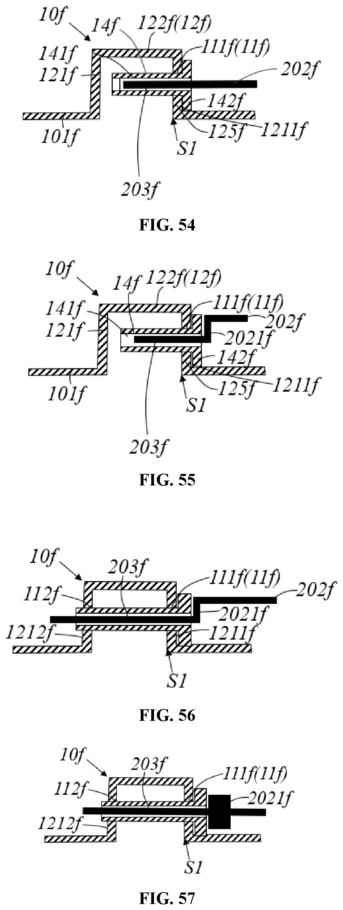

With reference to FIG. 54, shown is a schematic view of a cross-section of the fixing portion 10f in a direction perpendicular to the buccal-lingual connection line cooperating with an archwire 202f in a first specific example.

In the first specific example, the perforated portion 11f only comprises a first opening 111f located on a mesial side surface 1211f of the peripheral portion 121f, that is, at this time, other areas of the fixing portion body 12f are closed areas.

One end of the hole 141f at the sleeve 14f is an open end, and the other end is a closed end, that is, the hole 141f only penetrates a mesial end surface of the sleeve 14f but does not penetrate a distal end surface of the sleeve 14f.

The sleeve 14f enters the hollow space S1 through the first opening 111f along the mesial-distal direction, and the insertion end 203f of the archwire 202f is inserted into the hole 141f of the sleeve 14f through the open end of the mesial end surface, when the insertion end 203f abuts against the closed distal end surface of the hole 141f, a stop of the archwire 202f may be achieved.

With reference to FIG. 55, shown is a schematic view of a cross-section of the fixing portion 10f in a direction perpendicular to the buccal-lingual connection line cooperating with an archwire 202f in a second specific example.

In the second specific example, the perforated portion 11f only comprises a first opening 111f located on a mesial side surface 1211f of the peripheral portion 121f, that is, at this time, other areas of the fixing portion body 12f are closed areas.

Both ends of the hole 141f at the sleeve 14f are open ends, that is, the hole 141f penetrates a mesial end surface and a distal end surface of the sleeve 14f.

The dental assembly 300f comprises a stopper portion 2021f connected to the insertion end 203f, the stopper portion 2021f is a bent area of the archwire 202f, after the insertion end 203f enters the hole 141f, the stopper portion 2021f and a mesial side of the step portion 142f abut against each other to restrict a length of the archwire 202f entering the hollow space S1, and an acting force received by the archwire 202f may be transmitted to the fixing portion 10f through the cooperation between the stopper portion 2021f and the mesial side of the step portion 142f.

For other descriptions of the second specific example, reference may be made to other specific examples, which will not be repeated here.

With reference to FIG. 56, shown is a schematic view of a cross-section of the fixing portion 10f in a direction perpendicular to the buccal-lingual connection line cooperating with an archwire 202f in a third specific example.

The main difference between the third specific example and the second specific example lies in that: the perforated portion 11f in the third specific example comprises a first opening 111f located on a mesial side surface 1211f of the peripheral portion 121f and a second opening 112f located on a distal side surface 1212f, a connection line of the first opening 111f and the second opening 112f is parallel to the mesial-distal direction, and the sleeve 14f sequentially passes through the first opening 111f, the hollow space S1 and the second opening 112f.

The insertion end 203f restricts the insertion end 203f from continuing to move in the distal direction by forming a stopper portion 2021f in an area close to the insertion end 203f, and the stopper portion 2021f is a bent area of the archwire 202f.

Optionally, the second opening 112f is a through hole. In other specific examples, the second opening 112f may also be a blind hole.

For other descriptions of the third specific example, reference may be made to other specific examples, which will not be repeated here.

With reference to FIG. 57, shown is a schematic view of a cross-section of the fixing portion 10f in a direction perpendicular to the buccal-lingual connection line cooperating with an archwire 202f in a fourth specific example.

The main difference between the fourth specific example and the third specific example lies in that: the stopper portion 2021f in the fourth specific example is a block-shaped structure sleeved on the archwire 202f.

For other descriptions of the fourth specific example, reference may be made to other specific examples, which will not be repeated here.

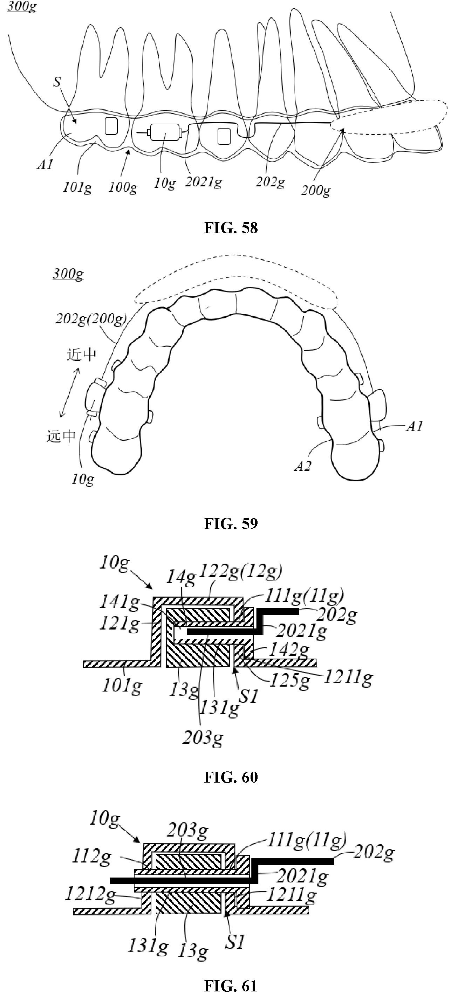

With reference to FIG. 58 to FIG. 62, in an eighth implementation form, a dental assembly 300g comprises a dental appliance 100g and a functional component 200g, the dental appliance 100g is an orthodontic appliance 100g, and the functional component 200g is a lip bumper.

In the eighth implementation form, the orthodontic appliance 100g comprises an appliance body 101g having a cavity S for accommodating teeth and a fixing portion 10g protruding from the appliance body 101g toward a side away from the cavity S, and the fixing portion 10g comprises a perforated portion 11g for inserting an insertion end 203g of the functional component 200g.

The fixing portion 10g is located on a buccal surface A1 or a lingual surface A2 of the appliance body 101g.

The fixing portion 10g comprises a fixing portion body 12g and an insert portion 13g.

The fixing portion body 12g encloses to form a hollow space S1 in communication with the cavity S, and the insert portion 13g is a pre-formed piece installed in the hollow space S1, but is not limited thereto, the insert portion 13g may also be in other forms, for example, the insert portion 13g is formed by a material filled in the hollow space S1.

Optionally, the fixing portion body 12g comprises a connected peripheral portion 121g and a top portion 122g, the peripheral portion 121g is connected to the appliance body 101g, and the peripheral portion 121g and the top portion 122g enclose to form the hollow space S1.

The fixing portion body 12g is substantially a cap-shaped structure, a hollow structure in a middle of the fixing portion body 12g forms the hollow space S1, the fixing portion body 12g and an extension region 1012g are integrally formed, a forming process of the fixing portion body 12g is simple, and the fixing portion body 12g and the extension region 1012g are stably cooperated.

Optionally, the perforated portion 11g comprises a first opening 111g penetrating the fixing portion body 12g and a passage 131g located in the insert portion 13g and in communication with the first opening 111g, and the first opening 111g is located at the peripheral portion 121g or the top portion 122g.

By adding the insert portion 13g, an overall strength of the entire fixing portion 10g may be improved, thereby improving a deformation resistance ability of the entire fixing portion 10g under an acting force.

The orthodontic appliance 100g further comprises a sleeve 14g, the sleeve 14g has a hole 141g with at least one end being an open end, the sleeve 14g passes through the first opening 111g and extends to the passage 131g, the fixing portion 10g exposes the open end, and the insertion end 203g is inserted into the hole 141g through the open end.

"The hole 141g with at least one end being an open end" means that the hole 141g penetrates at least one end surface of the sleeve 14g, and an insertion direction of the sleeve 14g is parallel to an extension direction of the hole 141g, after the sleeve 14g passes through the first opening 111g and extends to the passage 131g, the open end of the hole 141g is located on an outer side for the insertion end 203g to be inserted.

Optionally, the passage 131g is in a linear shape, which may facilitate the sleeve 14g to extend into the passage 131, but is not limited thereto.

When the insert portion 13g is a pre-formed piece installed in the hollow space S1, the passage 131g is a structure pre-formed in the insert portion 13g, that is, the passage 131g is a structure pre-formed in the insert portion 13g, the pre-formed piece may improve a strength of the insert portion 13g and is convenient for installation and use.

The sleeve 14g is detachably connected to the fixing portion 10g, that is, the sleeve 14g is detachably inserted into the first opening 111g and the passage 131g, different types of sleeves 14g may be installed to a same fixing portion 10g, and by replacing the sleeve 14g with a different inner diameter, it is convenient to adapt to archwires 202g of different diameters.

When the insert portion 13g is formed by a material filled in the hollow space S1, the insert portion 13g may be made of a resin material, a sleeve 14g with a required inner diameter may be inserted into the hollow space S1 first, and then the insert portion 13g is formed by filling resin, in this way, the sleeve 14g and the fixing portion 10g may be fixed together by forming the insert portion 13g through light curing of the resin.

Optionally, the perforated portion 11g further comprises a second opening 112g penetrating the fixing portion body 12g, and the passage 131g penetrates the insert portion 13g, the passage 131g communicating the first opening 111g and the second opening 112g.

A connection line of the first opening 111g, the passage 131g, and the second opening 112g is parallel to the mesial-distal direction, and the sleeve 14g also extends along the mesial-distal direction.

Optionally, an end of the sleeve 14g away from the first opening 111g is located in the passage 131g, that is, the sleeve 14g passes through the first opening 111g and extends to the passage 131g, and the sleeve 14g does not extend to the second opening 112g.

Alternatively, the sleeve 14g extends to the second opening 112g, that is, the sleeve sequentially passes through the first opening 111g, the passage 131g and the second opening 112g.

Optionally, one end of the sleeve 14g has a step portion 142g protruding in a direction away from the hole 141g, the fixing portion body 12g comprises a resisting portion 125g arranged around the first opening 111g, and a surface of the resisting portion 125g on a side away from the hollow space S1 cooperates with the step portion 142g to restrict a movement of the sleeve 14g toward the hollow space S1.

The surface of the resisting portion 125g on the side away from the hollow space S1 is a mesial side surface 1211g of the fixing portion body 12g, the step portion 142g is located on an outer side of the hollow space S1, the step portion 142g is a flanging structure at an end of the sleeve 14g, the step portion 142g and the mesial side surface 1211g abut against each other to restrict the sleeve 14g from continuing to move in the distal direction, and the step portion 142g is arranged around the open end.

Optionally, an outer wall of the sleeve 14g is formed with a protruding portion, and the protruding portion and the insert portion 13g are mutually limited.

The protruding portion is located inside the hollow space S1, and by mutual limitation between the protruding portion and the insert portion 13g, the sleeve 14g may be restricted from continuing to move in the distal direction, and the sleeve 14g may be prevented from detaching from the insert portion 13g.

In the following, several specific examples of the eighth implementation form are introduced.

With reference to FIG. 60, shown is a schematic view of a cross-section of the fixing portion 10g in a direction perpendicular to the buccal-lingual connection line cooperating with an archwire 202g in a first specific example.

In the first specific example, the perforated portion 11g only comprises a first opening 111g located on a mesial side surface 1211g of the peripheral portion 121g and a passage 131g located in the insert portion 13b, that is, at this time, other areas of the fixing portion body 12g are closed areas, the passage 131g is a linear semi-penetrating passage (i.e., the passage 131g does not completely penetrate the insert portion 13g), the sleeve 14g enters the passage 131g through the first opening 111g along the mesial-distal direction, the insertion end 203g is inserted into the hole 141g of the sleeve 14g, and at this time, a distal side of the hole 141g is closed by the insert portion 13g.

The dental assembly 300g comprises a stopper portion 2021g connected to the insertion end 203g, the stopper portion 2021g is a bent area of the archwire 202g, after the insertion end 203g enters the hole 141g, the stopper portion 2021g and a mesial side of the step portion 142g abut against each other to restrict a length of the archwire 202g entering the hollow space S1, and an acting force received by the archwire 202g may be transmitted to the fixing portion 10g through the cooperation between the stopper portion 2021g and the mesial side of the step portion 142g.

With reference to FIG. 61, shown is a schematic view of a cross-section of the fixing portion 10g in a direction perpendicular to the buccal-lingual connection line cooperating with an archwire 202g in a second specific example.

The main difference between the second specific example and the first specific example lies in that: the perforated portion 11g in the second specific example further comprises a second opening 112g located on a distal side surface 1212g of the peripheral portion 121g, the passage 131g is a linear passage, and a connection line of the first opening 111g, the passage 131g and the second opening 112g is parallel to the mesial-distal direction, the sleeve 14g sequentially passes through the first opening 111g, the passage 131g and the second opening 112g.

The insertion end 203g restricts the insertion end 203g from continuing to move in the distal direction by forming a stopper portion 2021g in an area close to the insertion end 203g, and the stopper portion 2021g is a bent area of the archwire 202g.

Here, the second opening 112g is a through hole. In other specific examples, the second opening 112g may also be a blind hole.

For other descriptions of the second specific example, reference may be made to other specific examples, which will not be repeated here.

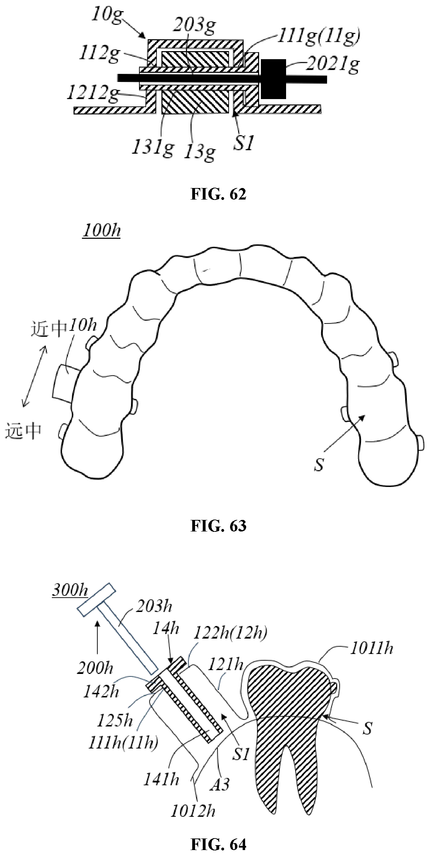

With reference to FIG. 62, shown is a schematic view of a cross-section of the fixing portion 10g in a direction perpendicular to the buccal-lingual connection line cooperating with an archwire 202g in a third specific example.

The main difference between the third specific example and the second specific example lies in that: the stopper portion 2021g in the third specific example is a block-shaped structure sleeved on the archwire 202g.

For other descriptions of the third specific example, reference may be made to other specific examples, which will not be repeated here.

For other descriptions of the eighth implementation form, reference may be made to other implementation forms, which will not be repeated here.

With reference to FIG. 63 and FIG. 64, in a ninth implementation form, a dental assembly 300h is an anchorage screw guide assembly 300h, the anchorage screw guide assembly 300h comprises an anchorage screw guide 100h and a functional component 200h, and the functional component 200h is an anchorage screw 200h.

In the ninth implementation form, the anchorage screw guide 100h comprises a guide body 1011h having a cavity S for accommodating teeth and an extension region 1012h, the extension region 1012h is a region formed by the guide body 1011h extending toward a gingival area A3, that is, at this time, an appliance body 101h comprises the connected guide body 1011h and the extension region 1012h, a fixing portion 10h is located on the extension region 1012h, specifically, the fixing portion 10h is located on a side of the extension region 1012h away from the gingival area A3, the fixing portion 10h has a perforated portion 11h for implanting an insertion end 203h of the anchorage screw 200h, and the insertion end 203h is an implantation portion at a lower end of the anchorage screw 200h.

The fixing portion 10h comprises a fixing portion body 12h.

The fixing portion body 12h encloses to form a hollow space S1 in communication with the cavity S.

Optionally, the fixing portion body 12h comprises a connected peripheral portion 121h and a top portion 122h, the peripheral portion 121h is connected to the extension region 1012h, and the peripheral portion 121h and the top portion 122h enclose to form the hollow space S1.

The fixing portion body 12h is substantially a cap-shaped structure, a hollow structure in a middle of the fixing portion body 12h forms the hollow space S1, the fixing portion body 12h and the extension region 1012h are integrally formed, a forming process of the fixing portion body 12h is simple, and the fixing portion body 12h and the extension region 1012h are stably cooperated.

Optionally, the perforated portion 11h comprises a first opening 111h penetrating the fixing portion body 12h, and the first opening 111h is located at the top portion 122h.

The anchorage screw guide 100h further comprises a sleeve 14h, the sleeve 14h has a hole 141h penetrating the sleeve 14h, the hole 141 communicates the gingival area A3, the sleeve 14h passes through the first opening 111h and extends to the hollow space S1, and an implantation portion of the anchorage screw 200h passes through the hole 141h to be implanted into the gingival area A3.

The sleeve 14h is detachably connected to the fixing portion 10h, that is, the sleeve 14h is detachably installed to the fixing portion body 12h, different types of sleeves 14h may be installed to a same fixing portion body 12h, and by replacing the sleeve 14h with a different inner diameter, it is convenient to adapt to anchorage screws 200h of different diameters.

The cooperation between the fixing portion body 12h and the sleeve 14h may improve an overall strength, and the hole 141h of the sleeve 14h may provide a guiding effect for an implantation of the anchorage screw 200h, thereby improving an accuracy of the implantation of the anchorage screw 200h.

Optionally, one end of the sleeve 14h has a step portion 142h protruding in a direction away from the hole 141h, the fixing portion body 12h comprises a resisting portion 125h arranged around the first opening 111h, and a surface of the resisting portion 125h on a side away from the hollow space S1 cooperates with the step portion 142h to restrict a movement of the sleeve 14h toward the hollow space S1.

The surface of the resisting portion 125h on the side away from the hollow space S1 is an upper end surface of the top portion 122h of the fixing portion body 12h, the step portion 142h is located on an outer side of the hollow space S1, the step portion 142h is a flanging structure at an end of the sleeve 14h, and the step portion 142h and the upper end surface of the top portion 122h abut against each other to restrict the sleeve 14h from continuing to move toward the gingival area A3.

For other descriptions of the ninth implementation form, reference may be made to other implementation forms, which will not be repeated here.

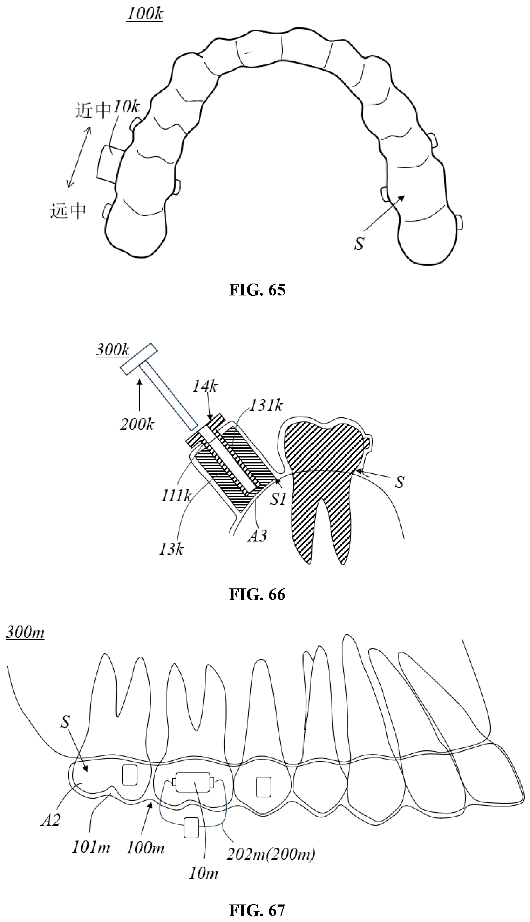

With reference to FIG. 65 to FIG. 66, in a tenth implementation form, a dental assembly 300k is an anchorage screw guide assembly 300k, the anchorage screw guide assembly 300k comprises an anchorage screw guide 100k and a functional component 200k, and the functional component 200k is an anchorage screw 200k.

The main difference between the tenth implementation form and the ninth implementation form lies in that: in the tenth implementation form, the fixing portion 10k further comprises an insert portion 13k located in the hollow space S1, the perforated portion 11k further comprises a passage 131k penetrating the insert portion 13k, and the sleeve 14k passes through the first opening 111k and extends to the passage 131k.

The insert portion 13k is a pre-formed piece installed in the hollow space S1, but is not limited thereto, the insert portion 13k may also be in other forms, for example, the insert portion 13k is formed by a material filled in the hollow space S1, and the material can be pre-filled in the hollow space S1 before implanting the anchorage screw 200k.

The sleeve 14k is fixed in the fixing portion body 12k through the insert portion 13k, which may improve a retention stability of the sleeve 14k, thereby improving a guiding effect of the sleeve 14k on the anchorage screw 200k, and improving an accuracy of the implantation of the anchorage screw 200k.

For other descriptions of the tenth implementation form, reference may be made to other implementation forms, which will not be repeated here.

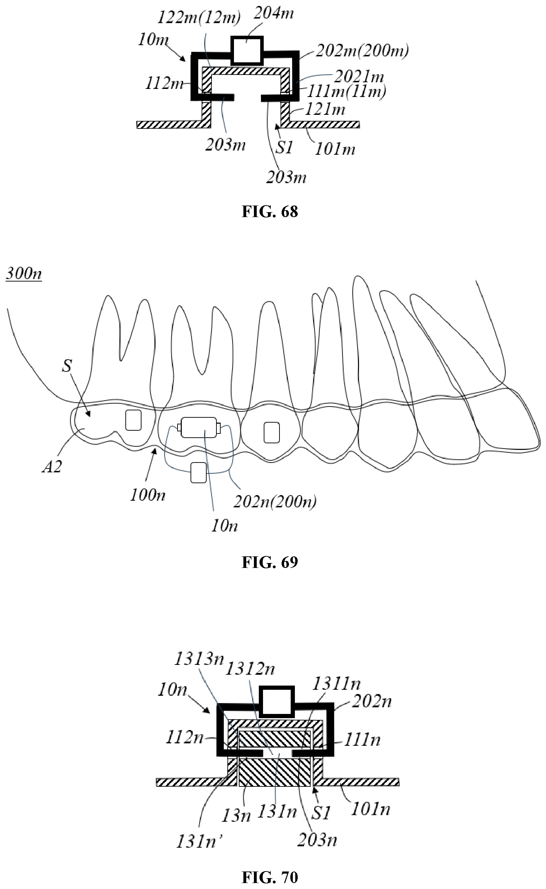

With reference to FIG. 67 and FIG. 68, in an eleventh implementation form, a dental assembly 300m comprises a dental appliance 100m and a functional component 200m, and the dental appliance 100m is an orthodontic appliance 100m.

In the eleventh implementation form, the orthodontic appliance 100m comprises an appliance body 101m having a cavity S for accommodating teeth and a fixing portion 10m protruding from the appliance body 101m toward a side away from the cavity S, and the fixing portion 10m comprises a perforated portion 11m for inserting an insertion end 203m of the functional component 200m.

The fixing portion 10m further comprises a fixing portion body 12m, and the fixing portion body 12m encloses to form a hollow space S1 in communication with the cavity S.

Optionally, the fixing portion body 12m comprises a connected peripheral portion 121m and a top portion 122m, the peripheral portion 121m is connected to the appliance body 101m, and the peripheral portion 121m and the top portion 122m enclose to form the hollow space S1.

The fixing portion body 12m is substantially a cap-shaped structure, a hollow structure in a middle of the fixing portion body 12m forms the hollow space S1, the fixing portion body 12m and the appliance body 101m are integrally formed, a forming process of the fixing portion body 12m is simple, and the fixing portion body 12m and the appliance body 101m are stably cooperated.

The perforated portion 11m comprises a first opening 111m and a second opening 112m penetrating the fixing portion body 12m, the first opening 111m and the second opening 112m are arranged at an interval, the first opening 111m is located at the peripheral portion 121m or the top portion 122m, and the second opening 112m is located at the peripheral portion 121m or the top portion 122m.

In the eleventh implementation form, the first opening 111m and the second opening 112m are located at a same fixing portion 10m, taking the first opening 111m and the second opening 112m being located on two opposite sides of the peripheral portion 121m as an example, specifically, the first opening 111m is located at a mesial end surface of the fixing portion body 12m, and the second opening 112m is located at a distal end surface of the fixing portion body 12m, but is not limited thereto.

The functional component 200m comprises two insertion ends 203m, and the two insertion ends 203m respectively pass through the first opening 111m and the second opening 112m and extend to the hollow space S1, that is, one of the two insertion ends 203m is inserted into the hollow space S1 from one side of the first opening 111m, and the other is inserted into the hollow space S1 from one side of the second opening 112m.

The functional component 200m may be directly fixed to the fixing portion 10m through the two insertion ends 203m, and the fixing portion 10m serves as an interface to achieve mutual fixation between a functional component 20m and the orthodontic appliance 100m.

The functional component 200m comprises a functional component body 204m and an archwire 202m connected to the functional component body 204m, and the insertion end 203m is a free end of the archwire 202m.

Optionally, the two insertion ends 203m are two free ends of the archwire 202m of a same functional component 200m.

Specifically, the functional component body 204m is located in a middle of the archwire 202m, the archwire 202m comprises two free ends away from the functional component body 204m, that is, the archwire 202m comprises two portions located on two sides of the functional component body 204m, and two ends of the two portions away from the functional component body 204m are the two free ends.

The functional component body 204m may be, for example, a tongue training element, a traction buckle, etc. For example, taking the functional component body 204m being a palatal bead movably sleeved on the archwire 202m as an example, the palatal bead may perform tongue training, and the fixing portion 10m may be located on a lingual surface A2 of the appliance body 101m, but is not limited thereto, in other implementation forms, the fixing portion 10m may also be located on a buccal surface of the appliance body 101m.

Optionally, the dental assembly 300m further comprises two stopper portions 2021m connected to the two free ends (i.e., the two insertion ends 203m), a peripheral area of the first opening 111m and a peripheral area of the second opening 112m respectively cooperate with the two stopper portions 2021m to restrict the archwire 202m from moving toward the hollow space S1, and the stopper portion 2021m is a bent area of the archwire 202m.

The two ends of the archwire 202m away from the functional component body 204m may be bent inwardly to form the two insertion ends 203m and the two stopper portions 2021m, at this time, the functional component 200m is substantially an annular structure having an opening, the opening being formed by an area between the two insertion ends 203m and used to match the fixing portion body 12m.

Optionally, the stopper portion may also be a block-shaped structure sleeved on the archwire 202m, for details, reference may be made to other implementation forms, alternatively, the two insertion ends 203m may also abut against an inner wall or other structures in the hollow space S1 to achieve a stop.

For other descriptions of the eleventh implementation form, reference may be made to other implementation forms, which will not be repeated here.

With reference to FIG. 69 and FIG. 70, in a twelfth implementation form, a dental assembly 300n comprises a dental appliance 100n and a functional component 200n, and the dental appliance 100n is an orthodontic appliance 100n.

The main difference between the twelfth implementation form and the eleventh implementation form lies in that: the fixing portion 10n in the twelfth implementation form further comprises an insert portion 13n located in the hollow space S1.

The perforated portion 11n further comprises a passage 131n located in the insert portion 13n and in communication with the first opening 111n, and an additional passage 131n' located in the insert portion 13n and in communication with the second opening 112n, one of the two insertion ends 203n passes through the first opening 111n and extends to the passage 131n, and the other passes through the second opening 112n and extends to the additional passage 131n'.

By adding the insert portion 13n, an overall strength of the entire fixing portion 10n may be improved, thereby improving a deformation resistance ability of the entire fixing portion 10n under an acting force, one insertion end 203n passes through both the first opening 111n and the passage 131n, and the other insertion end 203n passes through both the second opening 112n and the additional passage 131n', that is, the insertion end 203n is connected to both the fixing portion body 12n and the insert portion 13n, which may greatly improve a stability of the cooperation between the insertion end 203n and the fixing portion 10n, thereby improving a mutual fixation strength between the functional component 200n and the fixing portion 10n.

Optionally, the additional passage 131n' and the passage 131n are mutually conducted, or the additional passage 131n' and the passage 131n are arranged in a staggered manner.

In this implementation form, taking the additional passage 131n' and the passage 131n being mutually conducted as an example, that is, the passage 131n communicates the first opening 111n and the second opening 112n, and the two insertion ends 203n respectively pass through the first opening 111n and the second opening 112n and extend to the passage 131n.

Optionally, the passage 131n is in a linear shape, but is not limited thereto.

Optionally, the passage 131n comprises a first passage 1311n close to the first opening 111n and a second passage 1312n connected to the first passage 1311n, and an opening caliber of the first passage 1311n is greater than or equal to an opening caliber of the second passage 1312n.

That is, generally, a portion of the passage 131n close to the first opening 111n has a relatively large opening caliber, in this way, it may be avoided that the insert portion 13n is damaged when the first opening 111n is formed at the hollow space S1 where the insert portion 13n is installed, of course, the opening caliber of the first passage 1311n may be equal to the opening caliber of the second passage 1312n.

Similarly, a side of the second passage 1312n away from the first passage 1311n further comprises a third passage 1313n, and an opening caliber of the third passage 1313n is larger than the opening caliber of the second passage 1312n.

That is, at this time, the entire passage 131n is in a form with a small middle and two large ends, which may avoid damaging the insert portion 13n during a subsequent opening process.

Optionally, the insert portion 13n is a pre-formed piece installed in the hollow space S1, and the passage 131n is a structure pre-formed in the insert portion 13n, but is not limited thereto, the insert portion 13n may also be in other forms, for example, the insert portion 13n is formed by a material filled in the hollow space S1.

For other descriptions of the twelfth implementation form, reference may be made to other implementation forms, which will not be repeated here.

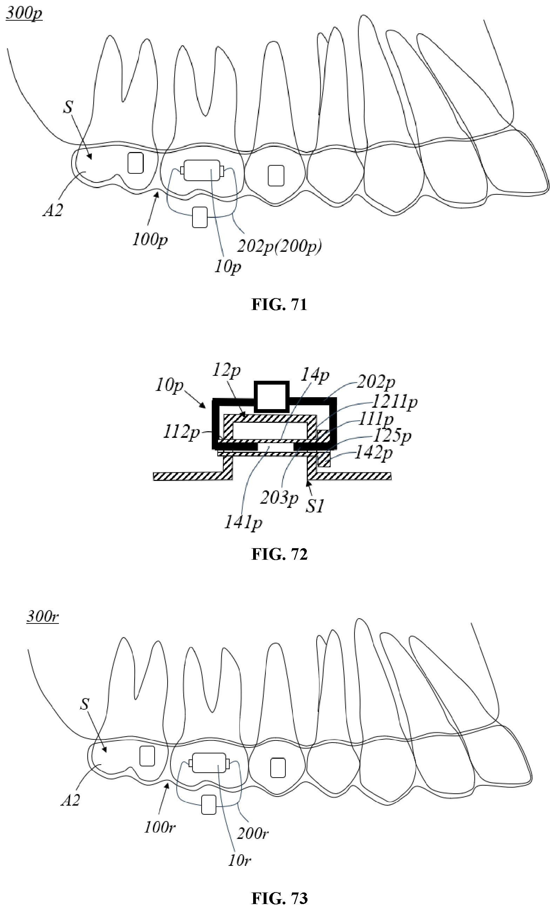

With reference to FIG. 71 and FIG. 72, in a thirteenth implementation form, a dental assembly 300p comprises a dental appliance 100p and a functional component 200p, and the dental appliance 100p is an orthodontic appliance 100p.

The main difference between the thirteenth implementation form and the eleventh implementation form lies in that: the orthodontic appliance 100p in the thirteenth implementation form further comprises at least one sleeve 14p, the sleeve 14p has a hole 141p with at least one end being an open end, the sleeve 14p passes through the first opening 111p and extends to the hollow space S1, the fixing portion 10p exposes the open end, and the insertion end 203p is inserted into the hole 141p through the open end.

"The hole 141p with at least one end being an open end" means that the hole 141p penetrates at least one end surface of the sleeve 14p, and an insertion direction of the sleeve 14p is parallel to an extension direction of the hole 141p, after the sleeve 14p passes through the first opening 111p and extends to the hollow space S1, the open end of the hole 141p is located on an outer side for the insertion end 203p to be inserted.

The sleeve 14p is detachably connected to the fixing portion 10p, that is, the sleeve 14p is detachably installed to the fixing portion body 12p, different types of sleeves 14p may be installed to a same fixing portion body 12p, and by replacing the sleeve 14p with a different inner diameter, it is convenient to adapt to archwires 202p of different diameters.

Optionally, one end of the sleeve 14p has a step portion 142p protruding in a direction away from the hole 141p, the fixing portion body 12p comprises a resisting portion 125p arranged around the first opening 111p, and a surface of the resisting portion 125p on a side away from the hollow space S1 cooperates with the step portion 142p to restrict a movement of the sleeve 14p toward the hollow space S1.

The surface of the resisting portion 125p on the side away from the hollow space S1 is a mesial side surface 1211p of the fixing portion body 12p, the step portion 142p is located on an outer side of the hollow space S1, the step portion 142p is a flanging structure at an end of the sleeve 14p, the step portion 142p and the mesial side surface 1211p abut against each other to restrict the sleeve 14p from continuing to move in the distal direction, and the step portion 142p is arranged around the open end.

Optionally, a sleeve 14p having a hole 141p may also be arranged at the second opening 112p, and the insertion end 203p at the second opening 112p is also inserted into the hole 141p.

Optionally, a same sleeve 14p may be simultaneously inserted into the first opening 111p and the second opening 112p, at this time, both ends of the hole 141p are open ends, and the sleeve 14p sequentially passes through the first opening 111p, the hollow space S1 and the second opening 112p.

For other descriptions of the thirteenth implementation form, reference may be made to other implementation forms, which will not be repeated here.

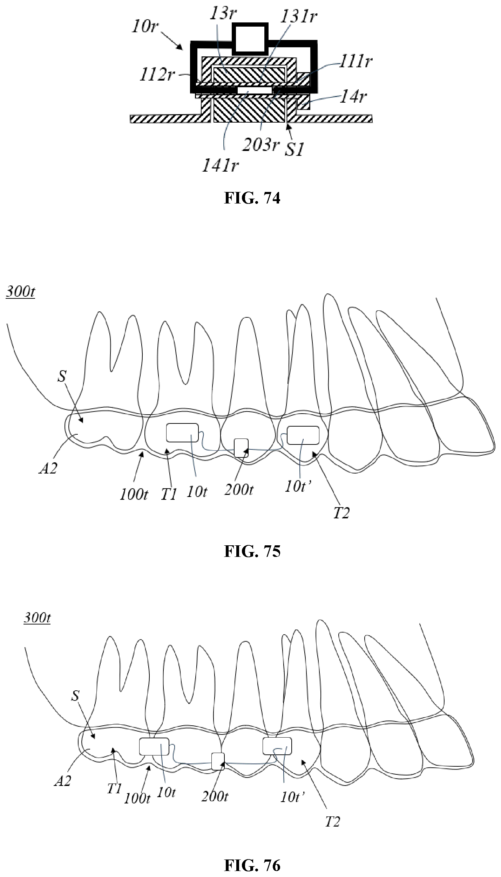

With reference to FIG. 73 and FIG. 74, in a fourteenth implementation form, a dental assembly 300r comprises a dental appliance 100r and a functional component 200r, and the dental appliance 100r is an orthodontic appliance 100r.

The main difference between the fourteenth implementation form and the thirteenth implementation form lies in that: the fixing portion 10r in the fourteenth implementation form further comprises an insert portion 13r located in the hollow space S1, and the insert portion 13r may be used to fix a sleeve 14r.

The perforated portion 11r further comprises a passage 131r penetrating the insert portion 13r, the sleeve 14r passes through the first opening 111r and extends to the passage 131r, and the sleeve 14r comprises a hole 141r with both ends being open ends.

Optionally, the passage 131r communicates the first opening 111r and the second opening 112r, the sleeve 14r sequentially passes through the first opening 111r, the passage 131r and the second opening 112r, and the two insertion ends 203r respectively pass through the two open ends to enter the hole 141r.

Optionally, the insert portion 13r is a pre-formed piece installed in the hollow space S1, and the passage 131r is a structure pre-formed in the insert portion 13r, but is not limited thereto, the insert portion 13r may also be in other forms, for example, the insert portion 13r is formed by a material filled in the hollow space S1.

For other descriptions of the fourteenth implementation form, reference may be made to other implementation forms, which will not be repeated here.

With reference to FIG. 75 to FIG. 77, in a fifteenth implementation form, a dental assembly 300t comprises a dental appliance 100t and a functional component 200t, and the dental appliance 100t is an orthodontic appliance 100t.

In the fifteenth implementation form, the orthodontic appliance 100t comprises an appliance body 101t having a cavity S for accommodating teeth and a fixing portion 10t protruding from the appliance body 101t toward a side away from the cavity S, and the fixing portion 10t comprises a perforated portion 11t for inserting an insertion end 203t of the functional component 200t.

The fixing portion 10t further comprises a fixing portion body 12t, and the fixing portion body 12t encloses to form a hollow space S1 in communication with the cavity S.

Optionally, the fixing portion body 12t comprises a connected peripheral portion 121t and a top portion 122t, the peripheral portion 121t is connected to the appliance body 101t, and the peripheral portion 121t and the top portion 122t enclose to form the hollow space S1.

The fixing portion body 12t is substantially a cap-shaped structure, a hollow structure in a middle of the fixing portion body 12t forms the hollow space S1, the fixing portion body 12t and the appliance body 101t are integrally formed, a forming process of the fixing portion body 12t is simple, and the fixing portion body 12t and the appliance body 101t are stably cooperated.

The perforated portion 11t comprises a first opening 111t and a second opening 112t penetrating the fixing portion body 12t, and the first opening 111t and the second opening 112t are arranged at an interval.

Optionally, the first opening 111t and the second opening 112t are respectively located at two fixing portions 10t arranged at an interval, the two fixing portions 10t are respectively a first fixing portion 10t and a second fixing portion 10t', the first opening 111t is located at a peripheral portion 121t or a top portion 122t of the first fixing portion 10t, and the second opening 112t is located at a peripheral portion 121t' or a top portion 122t' of the second fixing portion 10t'.

In the fifteenth implementation form, the first opening 111t is located at the peripheral portion 121t of the first fixing portion 10t, the second opening 112t is located at the peripheral portion 121t' of the second fixing portion 10t', and the first opening 111t and the second opening 112t are arranged face to face, that is, the first opening 111t is located on a side of the first fixing portion 10t close to the second fixing portion 10t', the second opening 112t is located on a side of the second fixing portion 10t' close to the first fixing portion 10t, and the first opening 111t and the second opening 112t are located in inner side areas of the two fixing portions.

The functional component 200t comprises two insertion ends 203t, and the two insertion ends 203t respectively pass through the first opening 111t and the second opening 112t and extend to the hollow space S1, that is, one of the two insertion ends 203t is inserted into the hollow space S1 of the first fixing portion 10t from one side of the first opening 111t, and the other is inserted into the hollow space S1 of the second fixing portion 10t' from one side of the second opening 112t.

The functional component 200t comprises a functional component body 204t and an archwire 202t connected to the functional component body 204t, and the insertion end 203t is a free end of the archwire 202t.

Optionally, the two insertion ends 203t are two free ends of the archwire 202t of a same functional component 200t.

Specifically, the functional component body 204t is located in a middle of the archwire 202t, the archwire 202t comprises two free ends away from the functional component body 204t, that is, the archwire 202t comprises two portions located on two sides of the functional component body 204t, and two ends of the two portions away from the functional component body 204t are the two free ends.

The functional component body 204t may be, for example, a tongue training element, a traction buckle, etc. For example, taking the functional component body 204t being a palatal bead movably sleeved on the archwire 202t as an example, the palatal bead may perform tongue training, and the fixing portion 10t may be located on a lingual surface A2 of the appliance body 101t, but is not limited thereto, in other implementation forms, the fixing portion 10t may also be located on a buccal surface of the appliance body 101t.

Compared with the eleventh implementation form, in the fifteenth implementation form, since a same functional component 200t is simultaneously connected to the first fixing portion 10t and the second fixing portion 10t' arranged at an interval, a length of the archwire 202t between the first opening 111t and the second opening 112t is relatively longer, and a palatal bead 204t (i.e., the functional component body 204t) sleeved on the archwire 202t may move back and forth relative to the archwire 202t in the mesial-distal direction, and a moving range of the palatal bead is wider, which may improve a degree of freedom of tongue training.

Optionally, with reference to FIG. 75, a number of tooth positions between two tooth positions corresponding to the first fixing portion 10t and the second fixing portion 10t' does not exceed two.

Teeth position is defined as an area on the appliance body 101t, one tooth position corresponds to one tooth, when the tooth position is an empty socket, a range of one empty socket is substantially a range of one tooth, and one tooth position corresponds to one empty socket.

The first fixing portion 10t is located at a first tooth position T1, the second fixing portion 10t' is located at a second tooth position T2, and "teeth position between the two tooth positions" refers to teeth position located between the first tooth position T1 and the second tooth position T2, in FIG. 75, the number of tooth positions between the first tooth position T1 and the second tooth position T2 is one.

It should be noted that, when the fixing portion is located at an interproximal space, the fixing portion is defined as being located at a relatively outer tooth position, for example, with reference to FIG. 76, when the first fixing portion 10t is located at an interproximal space, the first fixing portion 10t is defined as being located at a relatively distal first tooth position T1, when the second fixing portion 10t' is located at an interproximal space, the second fixing portion 10t' is defined as being located at a relatively mesial second tooth position T2, and the number of tooth positions between the first tooth position T1 and the second tooth position T2 is two.

By controlling a distance between the two fixing portions, a stability of the functional component 200t may be effectively improved.

Optionally, the dental assembly 300t further comprises two stopper portions 2021t connected to the two free ends (i.e., the two insertion ends 203t), a peripheral area of the first opening 111t and a peripheral area of the second opening 112t respectively cooperate with the two stopper portions 2021t to restrict the archwire 202t from moving toward the hollow space S1, and the stopper portion 2021t is a bent area of the archwire 202t.

Optionally, the stopper portion may also be a block-shaped structure sleeved on the archwire 202t, or the two insertion ends 203t may also abut against an inner wall or other structures in the hollow space S1 to achieve a stop.

For other descriptions of the fifteenth implementation form, reference may be made to other implementation forms, which will not be repeated here.

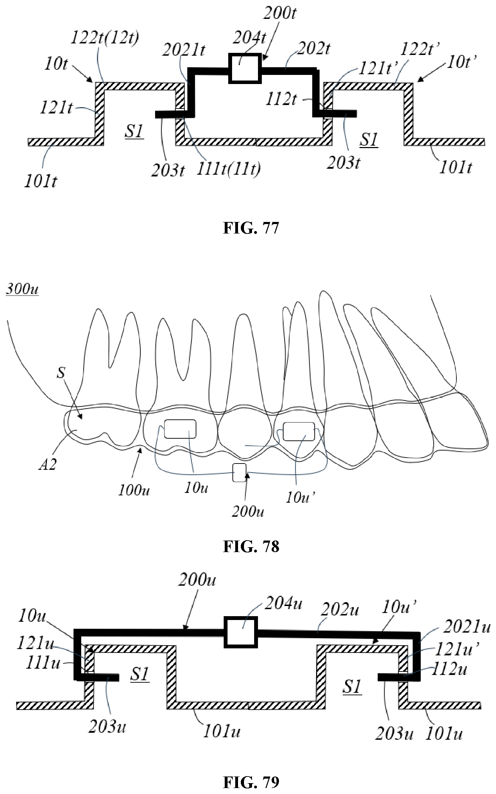

With reference to FIG. 78 and FIG. 79, in a sixteenth implementation form, a dental assembly 300u comprises a dental appliance 100u and a functional component 200u, and the dental appliance 100u is an orthodontic appliance 100u.

The main difference between the sixteenth implementation form and the fifteenth implementation form lies in that: in the sixteenth implementation form, the first opening 111u is located at a peripheral portion 121u of the first fixing portion 10u away from the second fixing portion 10u', the second opening 112u is located at a peripheral portion 121u' of the second fixing portion 10u' away from the first fixing portion 10u, and the first opening 111u and the second opening 112u are located in outer side areas of the two fixing portions.

The functional component 200u comprises two insertion ends 203u, and the two insertion ends 203u respectively pass through the first opening 111u and the second opening 112u and extend to the hollow space S1, that is, one of the two insertion ends 203u is inserted into the hollow space S1 of the first fixing portion 10u from one side of the first opening 111u, and the other is inserted into the hollow space S1 of the second fixing portion 10u' from one side of the second opening 112u.

When a spacing distance between the two fixing portions in the fifteenth implementation form and the sixteenth implementation form is the same, compared with the fifteenth implementation form, a length of the archwire 202u between the first opening 111u and the second opening 112u in the sixteenth implementation form is relatively longer, and a movable range of a palatal bead 204u (i.e., the functional component body 204u) sleeved on the archwire 202u is wider, which may further improve a degree of freedom of tongue training.

Optionally, a number of tooth positions between two tooth positions corresponding to the first fixing portion 10u and the second fixing portion 10u' does not exceed two, for details, reference may be made to the description of the fifteenth implementation form.

Optionally, the dental assembly 300u further comprises two stopper portions 2021u connected to the two free ends (i.e., the two insertion ends 203u), a peripheral area of the first opening 111u and a peripheral area of the second opening 112u respectively cooperate with the two stopper portions 2021u to restrict the archwire 202u from moving toward the hollow space S1, and the stopper portion 2021u is a bent area of the archwire 202u.

The two ends of the archwire 202u away from the functional component body 204u may be bent inwardly to form the two insertion ends 203u and the two stopper portions 2021u, at this time, the functional component 200u is substantially an annular structure having an opening, the opening being formed by an area between the two insertion ends 203u and used to match the two fixing portions.

Optionally, the stopper portion may also be a block-shaped structure sleeved on the archwire 202u, or the two insertion ends 203u may also abut against an inner wall or other structures in the hollow space S1 to achieve a stop.

For other descriptions of the sixteenth implementation form, reference may be made to other implementation forms, which will not be repeated here.

It should be noted that, on the basis of the fifteenth implementation form and the sixteenth implementation form, an insert portion and a sleeve involved in the twelfth to fourteenth implementation forms may be further provided, which will not be repeated here.

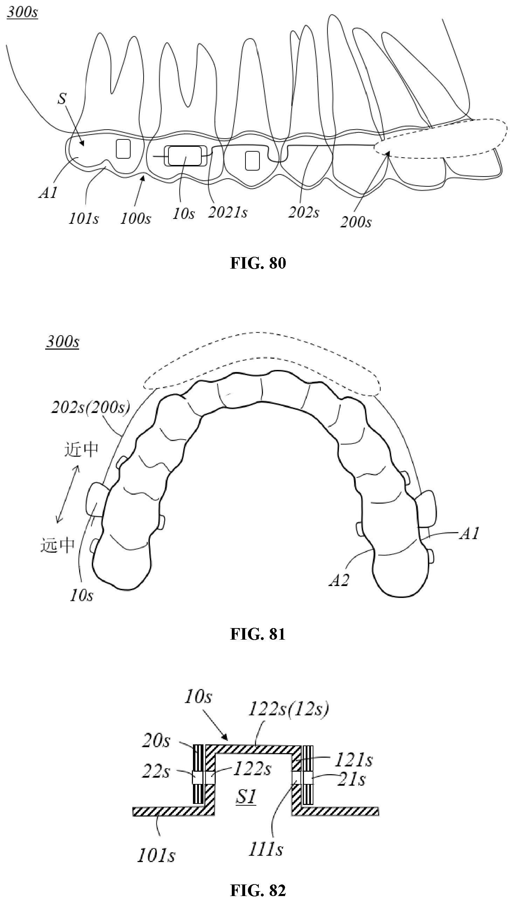

With reference to FIG. 80 to FIG. 88, in a seventeenth implementation form, a dental assembly 300s comprises a dental appliance 100s and a functional component 200s, the dental appliance 100s is an orthodontic appliance 100s, and the functional component 200s is a lip bumper.

In the seventeenth implementation form, the orthodontic appliance 100s comprises an appliance body 101s having a cavity S for accommodating teeth and a fixing portion 10s protruding from the appliance body 101s toward a side away from the cavity S, and the fixing portion 10s comprises a perforated portion 11s for inserting an insertion end 203s of the functional component 200s.

The fixing portion 10s further comprises a fixing portion body 12s, and the fixing portion body 12s encloses to form a hollow space S1 in communication with the cavity S.

Optionally, the fixing portion body 12s comprises a connected peripheral portion 121s and a top portion 122s, the peripheral portion 121s is connected to the appliance body 101s, and the peripheral portion 121s and the top portion 122s enclose to form the hollow space S1.

The fixing portion body 12s is substantially a cap-shaped structure, a hollow structure in a middle of the fixing portion body 12s forms the hollow space S1, the fixing portion body 12s and the appliance body 101s are integrally formed, a forming process of the fixing portion body 12s is simple, and the fixing portion body 12s and the appliance body 101s are stably cooperated.

Optionally, the orthodontic appliance 100s further comprises a cover body 20s, the cover body 20s is located on a side of the fixing portion body 12s away from the hollow space S1, and the cover body 20s is arranged corresponding to at least a partial area of the peripheral portion 121s and/or at least a partial area of the top portion 122s.

Optionally, the cover body 20s is arranged close to the fixing portion body 12s, by providing the cover body 20s, an overall strength of the fixing portion 10s may be improved, thereby improving a deformation resistance ability of the fixing portion 10s under an acting force, that is, when the fixing portion 10s has a deformation tendency under an acting force, the cover body 20s may support the fixing portion 10s to offset this deformation.

The cover body 20s and the fixing portion body 12s are detachably connected or fixedly connected, and after the cover body 20s and the fixing portion body 12s are installed in place, the cover body 20s and the fixing portion body 12s are relatively stationary.

Optionally, the perforated portion 11s comprises at least one opening (111s, 112s) penetrating the fixing portion body 12s, the cover body 20s comprises a slot hole (21s, 22s) arranged corresponding to the opening (111s, 112s), when the insertion end 203s sequentially passes through the slot hole (21s, 22s) and the opening (111s, 112s), the slot hole (21s, 22s) is a through hole, and when the insertion end 203s sequentially passes through the opening (111s, 112s) and the slot hole (21s, 22s), the slot hole (21s, 22s) is a through hole or a blind hole.

That is, the insertion end 203s first passes through the slot hole (21s, 22s) and then passes through the opening (111s, 112s), at this time, the slot hole (21s, 22s) is a through hole, and the insertion end 203s first passes through the opening (111s, 112s) and then passes through the slot hole (21s, 22s), at this time, the slot hole (21s, 22s) is a through hole or a blind hole.

Of course, the slot hole (21s, 22s) may also not be formed at the cover body 20s, that is, at this time, the cover body 20s only plays a role of supporting the fixing portion 10s.

Specifically, with reference to FIG. 82 to FIG. 88, shown are cross-sectional schematic views of the fixing portion body 12s and the cover body 20s in a direction perpendicular to the buccal-lingual connection line, and there are various specific examples of the cover body 20s.

With reference to FIG. 82, in a first specific example, the fixing portion body 12s comprises a first opening 111s and a second opening 112s arranged face to face, the first opening 111s and the second opening 112s are both through holes, the cover body 20s is arranged around the peripheral portion 121s, that is, at this time, the cover body 20s is a surrounding wall structure, the cover body 20s has a first slot hole 21s arranged corresponding to the first opening 111s and a second slot hole 22s arranged corresponding to the second opening 112s, the first slot hole 21s and the second slot hole 22s are both through holes, and the cover body 20s at various positions has an equal thickness.

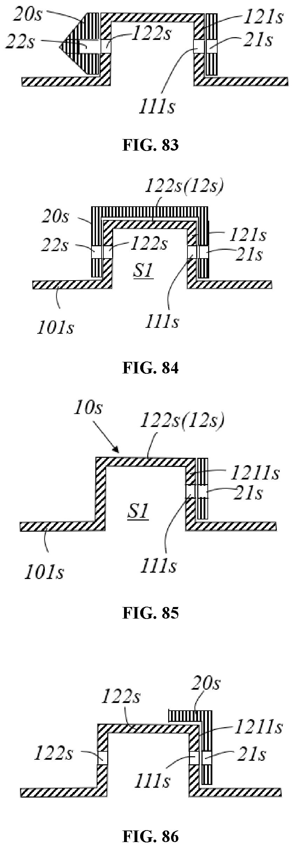

With reference to FIG. 83, in a second specific example, the fixing portion body 12s comprises a first opening 111s and a second opening 112s arranged face to face, the first opening 111s and the second opening 112s are both through holes, the cover body 20s is arranged around the peripheral portion 121s, that is, at this time, the cover body 20s is a surrounding wall structure, the cover body 20s has a first slot hole 21s arranged corresponding to the first opening 111s and a second slot hole 22s arranged corresponding to the second opening 112s, the first slot hole 21s is a through hole, and the second slot hole 22s is a blind hole.

Here, the cover body 20s on the distal side is thickened, for example, by a slope structure to achieve the thickening, but is not limited thereto, the thickening may improve a deformation resistance ability of the fixing portion body 12s under an acting force.

With reference to FIG. 84, in a third specific example, the fixing portion body 12s comprises a first opening 111s and a second opening 112s arranged face to face, the first opening 111s and the second opening 112s are both through holes, the cover body 20s is arranged around the peripheral portion 121s and the top portion 122s, that is, at this time, the cover body 20s is a cap-clamping structure, the cover body 20s has a first slot hole 21s arranged corresponding to the first opening 111s and a second slot hole 22s arranged corresponding to the second opening 112s, the first slot hole 21s and the seco nd slot hole 22s are both through holes, and the cover body 20s at various positions has an equal thickness.

With reference to FIG. 85, in a fourth specific example, the fixing portion body 12s only comprises a first opening 111s located on the mesial side surface 1211s, the cover body 20s is only arranged corresponding to the mesial side surface 1211s, that is, at this time, the cover body 20s is a gasket structure, the cover body 20s has a first slot hole 21s arranged corresponding to the first opening 111s, and the first slot hole 21s is a through hole.

With reference to FIG. 86, in a fifth specific example, the fixing portion body 12s comprises a first opening 111s located on the mesial side surface 1211s and a second opening 112s located on the distal side surface 1212s, the cover body 20s is arranged corresponding to the mesial side surface 1211s and a connected portion of the top portion 122s, that is, at this time, the cover body 20s is an L-shaped structure, the cover body 20s has a first slot hole 21s arranged corresponding to the first opening 111s, and the first slot hole 21s is a through hole.

In the following, several specific examples of the cooperation between the fixing portion 10s and the archwire 202s in the seventeenth implementation form are introduced.

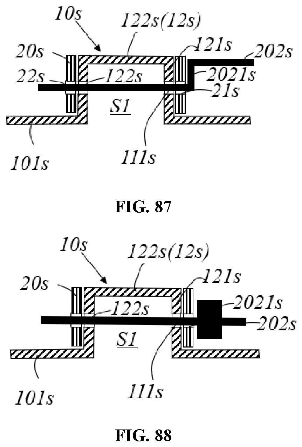

With reference to FIG. 87, shown is a schematic view of a cross-section of the fixing portion body 12s and the cover body 20s in a direction perpendicular to the buccal-lingual connection line cooperating with the archwire 202s in a first specific example.

In the first specific example, the fixing portion body 12s comprises a first opening 111s located on the mesial side surface 1211s and a second opening 112s located on the distal side surface 1212s, the first opening 111s and the second opening 112s are both through holes, the cover body 20s is arranged around the peripheral portion 121s, the cover body 20s has a first slot hole 21s arranged corresponding to the first opening 111s and a second slot hole 22s arranged corresponding to the second opening 112s, the first slot hole 21s and the second slot hole 22s are both through holes, and at this time, a connection line of the first slot hole 21s, the first opening 111s, the second opening 112s and the second slot hole 22s is parallel to the mesial-distal direction.

The insertion end 203s sequentially passes through the first slot hole 21s, the first opening 111s, the hollow space S1, the second opening 112s and the second slot hole 22, the archwire 202s comprises a stopper portion 2021s connected to the insertion end 203s, the stopper portion 2021s is a bent area of the archwire 202s, after the insertion end 203s enters the hole 141s, the stopper portion 2021s and a mesial side of the cover body 20s abut against each other to restrict a length of the archwire 202s entering the hollow space S1, and an acting force received by the archwire 202s may be transmitted to the fixing portion 10s through the cooperation between the stopper portion 2021s and the mesial side of the cover body 20s.

With reference to FIG. 88, shown is a schematic view of a cross-section of the fixing portion body 12s and the cover body 20s in a direction perpendicular to the buccal-lingual connection line cooperating with the archwire 202s in a second specific example.

The main difference between the second specific example and the first specific example lies in that: the stopper portion 2021s in the second specific example is a block-shaped structure sleeved on the archwire 202s.

For other descriptions of the second specific example, reference may be made to other specific examples, which will not be repeated here.

The cover body 20s of the seventeenth implementation form may also be applied to other implementation forms, for example, the fixing portion 10s may further comprise an insert portion, that is, at this time, an interior of the hollow space S1 is supported by the insert portion, and an exterior of the hollow space S1 is supported by the cover body 20s, which may further improve a deformation resistance ability of the hollow space S1, or, the fixing portion 10s may also be used in cooperation with a sleeve, or, the cover body 20s of the seventeenth implementation form may be used in an anchorage screw guide assembly, etc.

In summary, the dental appliance of the present application may be an orthodontic appliance, an anchorage screw guide, an attachment placement template, etc., and the fixing portion may serve as an interface to achieve mutual fixation or interaction between a functional component and the dental appliance.

In addition, the present application further relates to methods for forming a dental appliance and a dental assembly, and these forming methods are also applicable to application scenarios of an orthodontic appliance, an anchorage screw guide, an attachment placement template, etc.

It should be understood that, although this specification is described according to implementation forms, not every implementation form only contains one independent technical solution, this narrative manner of the specification is only for clarity, a person skilled in the art should regard the specification as a whole, and the technical solutions in the various implementation forms may also be appropriately combined to form other implementation forms understandable to a person skilled in the art.

The series of detailed descriptions listed above are only specific descriptions of feasible implementation forms of the present application, and they are not used to limit the protection scope of the present application, any equivalent implementation form or change made without departing from the technical spirit of the present application shall be included within the protection scope of the present application.

## Claims

1. A dental appliance, **characterized in that** it comprises an appliance body having a cavity, and a fixing portion protruding from the appliance body toward a side away from the cavity, wherein the fixing portion has a perforated portion.

2. The dental appliance according to claim 1, **characterized in that** the fixing portion comprises a fixing portion body, the fixing portion body encloses to form a hollow space in communication with the cavity, and the perforated portion comprises a first opening penetrating the fixing portion body.

3. The dental appliance according to claim 2, **characterized in that** the fixing portion body comprises a connected peripheral portion and a top portion, the peripheral portion is connected to the appliance body, the peripheral portion and the top portion enclose to form the hollow space, and the first opening is located at the peripheral portion or the top portion.

4. The dental appliance according to claim 2, **characterized in that** the dental appliance is an orthodontic appliance, the appliance body is an orthodontic appliance body having a cavity for accommodating teeth, and the fixing portion is located on a buccal surface or a lingual surface of the appliance body.

5. The dental appliance according to claim 4, **characterized in that** the fixing portion further comprises an insert portion located in the hollow space, the perforated portion further comprises a passage located in the insert portion and in communication with the first opening, and the insert portion is a pre-formed piece.

6. The dental appliance according to claim 5, **characterized in that** the perforated portion further comprises a second opening penetrating the appliance body, and the passage communicates the first opening and the second opening.

7. The dental appliance according to claim 2, **characterized in that** the dental appliance is an anchorage screw guide, the appliance body comprises a guide body having a cavity for accommodating teeth and an extension region, the extension region is a region formed by the guide body extending toward a gingival area, the fixing portion is located on the extension region, and the perforated portion communicates the gingival area.

8. The dental appliance according to claim 7, **characterized in that** the fixing portion further comprises an insert portion located in the hollow space, the perforated portion further comprises a passage located in the insert portion and in communication with the first opening, the passage communicates the gingival area, and the insert portion is a pre-formed piece, or the insert portion is formed by a material filled in the hollow space.

9. The dental appliance according to any one of claims 4 to 8, **characterized in that** the dental appliance further comprises a sleeve, the sleeve has a hole with at least one end being an open end, the sleeve passes through the first opening and extends to the hollow space, and the fixing portion exposes the open end.

10. The dental appliance according to claim 9, **characterized in that** the fixing portion further comprises an insert portion located in the hollow space, the perforated portion further comprises a passage located in the insert portion and in communication with the first opening, and the sleeve passes through the first opening and extends to the passage.

11. The dental appliance according to claim 9, **characterized in that** one end of the sleeve has a step portion protruding in a direction away from the hole, the fixing portion body comprises a resisting portion arranged around the first opening, and a surface of the resisting portion on a side away from the hollow space cooperates with the step portion to restrict a movement of the sleeve toward the hollow space.

12. The dental appliance according to claim 9, **characterized in that** the sleeve and the fixing portion are detachably connected.

13. The dental appliance according to claim 2, **characterized in that** the dental appliance is an attachment placement template, the appliance body is a template body having a cavity for accommodating teeth, the fixing portion is located on a buccal surface or a lingual surface of the template body, the fixing portion further comprises an insert portion located in the hollow space, the perforated portion further comprises a passage located in the insert portion and in communication with the first opening, the insert portion is an attachment installed to a tooth surface, and the insert portion is a pre-formed piece, or the insert portion is formed by a material filled in the hollow space.

14. The dental appliance according to claim 2, **characterized in that** the fixing portion body and the appliance body are integrally formed.

15. The dental appliance according to claim 2, **characterized in that** the dental appliance further comprises a reinforcement portion arranged adjacent to the fixing portion, the reinforcement portion protrudes from the appliance body toward a side away from the cavity, and the reinforcement portion forms a receiving cavity for accommodating an attachment on a tooth surface, and a height of the reinforcement portion is less than a height of the fixing portion.

16. The dental appliance according to claim 1, **characterized in that** the dental appliance is an anchorage screw guide, the appliance body comprises a guide body having a cavity for accommodating teeth and an extension region, the extension region is a region formed by the guide body extending toward a gingival area, the fixing portion is a pre-formed piece fixed to the extension region, and the perforated portion comprises a passage penetrating the pre-formed piece.

17. A dental assembly, **characterized in that** it comprises a functional component and the dental appliance according to any one of claims 1 to 16, the functional component comprises an insertion end, and the insertion end is limited in the perforated portion.

18. The dental assembly according to claim 17, **characterized in that** the dental appliance is an orthodontic appliance, the appliance body is an orthodontic appliance body having a cavity for accommodating teeth, the fixing portion is located on a buccal surface or a lingual surface of the appliance body, the functional component comprises an archwire connected to the orthodontic appliance, and the insertion end is a free end of the archwire.

19. The dental assembly according to claim 17, **characterized in that** the fixing portion comprises a fixing portion body, the fixing portion body encloses to form a hollow space in communication with the cavity, the perforated portion comprises a first opening and a second opening penetrating the fixing portion body, and two insertion ends of the functional component respectively pass through the first opening and the second opening and extend to the hollow space, the first opening and the second opening are located at a same fixing portion, or the first opening and the second opening are respectively located at two fixing portions arranged at an interval.

20. The dental assembly according to claim 17, **characterized in that** the fixing portion comprises a fixing portion body and an insert portion, the fixing portion body encloses to form a hollow space in communication with the cavity, the insert portion is located in the hollow space, the perforated portion comprises a first opening penetrating the fixing portion body and a passage located in the insert portion and in communication with the first opening, the functional component comprises an insertion end, the insertion end comprises an insertion end body and a retention structure protruding from the insertion end body, the insertion end passes through the first opening and extends to the passage, the retention structure and the insert portion are mutually limited, and the insert portion is formed by a material filled in the hollow space.

21. The dental assembly according to claim 17, **characterized in that** the functional component is a facebow, a lip bumper, an intrusion auxiliary archwire or an expansion auxiliary archwire.

22. The dental assembly according to claim 17, **characterized in that** the dental appliance is an anchorage screw guide, the appliance body comprises a guide body having a cavity for accommodating teeth and an extension region, the extension region is a region formed by the guide body extending toward a gingival area, the fixing portion is located on the extension region, the functional component is an anchorage screw, the insertion end is an implantation portion of the anchorage screw, and the implantation portion passes through the perforated portion to be implanted into the gingival area.

23. The dental assembly according to claim 17, **characterized in that** the dental appliance is an attachment placement template, the appliance body is a template body having a cavity for accommodating teeth, the fixing portion is located on a buccal surface or a lingual surface of the template body, the functional component comprises an archwire connected to the attachment placement template, and the insertion end is a free end of the archwire.

24. A method for forming a dental appliance, **characterized in that** it comprises steps:
providing a dental model, an insert portion is provided at a target position of the dental model, the insert portion is a pre-formed piece, and the insert portion has a passage;
performing film lamination to form a semi-finished product, the semi-finished product having a hollow space corresponding to the insert portion;
making an opening at the hollow space, and cutting and demolding the semi-finished product to obtain a dental appliance, the opening is mutually conducted with the passage, and the dental appliance comprises the insert portion accommodated in the hollow space.

25. The forming method according to claim 24, **characterized in that** providing a dental model, an insert portion is provided at a target position of the dental model specifically comprises:
providing a dental model;
adding an insert portion at a target position of the dental model.

26. The forming method according to claim 25, **characterized in that** adding an insert portion at a target position of the dental model specifically comprises:
adding a suspension portion at a target position of the dental model;
installing an insert portion at the suspension portion, the insert portion comprising a groove body cooperating with the suspension portion.

27. The forming method according to claim 25, **characterized in that** adding an insert portion at a target position of the dental model specifically comprises:
adding an insert portion at a target position of the dental model, and adding a support portion in an area of the dental model adjacent to the target position, the support portion being located on a side of the insert portion close to gingiva.
